# EUROPÄISCHE PATENTSCHRIFT

(11) **EP 3 433 824 B1**
(45) Veröffentlichungstag und Bekanntmachung des Hinweises auf die Patenterteilung: **02.09.2020**
(21) Anmeldenummer: 17713246.1
(22) Anmeldetag: 23.03.2017
(51) Int. Cl.: G06Q 50/06, H02J 3/14

(54) **VERFAHREN ZUM STEUERN EINER MULTIVALENTEN ENERGIEVERSORGUNGSANLAGE**
METHOD FOR CONTROLLING A MULTIVALENT ENERGY SUPPLY INSTALLATION
PROCÉDÉ POUR COMMANDER UNE INSTALLATION D'ALIMENTATION EN ÉNERGIE POLYVALENTE

(30) Priorität: 24.03.2016 DE 102016205035
(43) Veröffentlichungstag der Anmeldung: 30.01.2019
(73) Patentinhaber: Viessmann Werke GmbH & Co. KG, 35108 Allendorf (DE)
(72) Erfinder: ARNOLD, Christian, 36119 Neuhof-Rommerz (DE); BOCK, Martin, 35110 Frankenau (DE); GRAD, Andrej, 35088 Battenberg (DE); MAURER, Tobias, 35108 Allendorf (DE); OSTERLOH, Reinhard, 59955 Winterberg (DE); TIMMERMANN, Jörg, 35088 Battenberg (DE)
(74) Vertreter: MERH-IP Matias Erny Reichl Hoffmann Patentanwälte PartG mbB
(86) Internationale Anmeldenummer: PCT/EP2017/056925
(87) Internationale Veröffentlichungsnummer: WO 2017/162792

(56) Entgegenhaltungen:
- EP-A2- 1 202 425
- US-A1- 2011 012 427
- US-A1- 2011 071 690

## Beschreibung

Die vorliegende Erfindung betrifft ein Verfahren zum Steuern einer multivalenten Energieversorgungsanlage mit mindestens zwei Energieerzeugern, die mindestens zwei verschiedene Energieträger nutzen, um Energie in Form von Wärme und/oder Kälte und/oder elektrischer Energie bereitzustellen. Die Erfindung betrifft ferner eine Steuereinrichtung zum Steuern einer multivalenten Energieversorgungsanlage.

Die US-Patentanmeldung US 2011/012427 A1 beschreibt Verfahren zum Steuern und/oder Verwalten einer Vielzahl von Energieverbrauchern und Energieversorgern. Die US-Patentanmeldung US 2011/071690 A1 offenbart Verfahren zum Verwalten von Änderungen in einem Stromversorgungsnetz. Ferner ist aus der europäische Patentanmeldung EP 1202425 A2 ein System zum Planen der Energieversorgung von Verbrauchern bekannt.

Ein Verfahren zum Betreiben eines Systems mit mehreren Wärmeerzeugungseinrichtungen ist beispielsweise aus der EP 2187136 A2 bekannt. Das System kann Wärmeleistung unter Verwendung mehrerer Wärmeerzeugungseinrichtungen bereitstellen, wobei die Verteilung der Wärmeleistung auf die einzelnen Wärmeerzeugungseinrichtungen variabel ist, so dass diese nahe an ihrem optimalen Wirkungsgrad betrieben werden können. Die Zuteilung der Leistung kann nicht nur über ein übergeordnetes Kesselmanagementsystem erfolgen, sondern auch durch Abstimmung der einzelnen Wärmeerzeugungseinrichtungen untereinander erfolgen.

Aus der internationalen Patentanmeldung WO 2009/141176 A1 ist ein mobiles Heizsystem bekannt, das eine Mehrzahl von brennstoffbetriebenen Heizgeräten aufweist, die über ein Bussystem miteinander in Kommunikationsverbindung stehen. Das Heizsystem ist derart eingerichtet, dass sich beim Starten des Heizsystems, basierend auf vorbestimmten Regeln, eines der Heizgeräte als Master bezüglich der Ansteuerung von weiteren, an das Bussystem angeschlossenen Heizgeräten konfiguriert. Die verbleibenden Heizgeräte werden als Slaves konfiguriert.

Die europäische Patentanmeldung EP 2144130 A1 offenbart ein Gruppenverwaltungssystem, das eine Vielzahl von Vorrichtungen kollektiv steuern kann und ein flexibles Hinzufügen oder Ändern von Vorrichtungsgruppen erlaubt.

Ein hybrides Heizsystem bestehend aus mindestens einem Brennwertkessel und mindestens einem Nicht-Brennwertkessel ist aus der internationalen Patentanmeldung WO 2008/091970 A2 bekannt. Das Ein- beziehungsweise Ausschalten der einzelnen Kessel durch eine Steuerung erfolgt nach Bestimmung der Heizlast unter anderem auf Basis des Flusses in der Hauptleitung des Heizsystems sowie weiterer Startkriterien. Die Auswahl der Kessel erfolgt ferner in Abhängigkeit der Außentemperatur sowie der Betriebsstunden der einzelnen Kessel.

Der vorliegenden Erfindung liegt die Aufgabe zugrunde, ein Verfahren zum Steuern einer multivalenten Energieversorgungsanlage anzugeben, womit eine im Vergleich zum Stand der Technik verbesserte Regelgüte erzielt werden kann. Die Regelgüte beschreibt das Verhalten einer Regelung. Eine hohe (oder gute) Regelgüte bedeutet hierbei, dass ein bestimmter geforderter Sollwert in besonders kurzer Zeit erreicht werden kann. Eine niedrige (oder schlechte) Regelgüte bedeutet, dass ein bestimmter geforderter Sollwert erst in einer relativ langen Zeit erreicht wird. Die vorliegende Erfindung zielt somit darauf ab, die Steuerung einer multivalenten Energieversorgungsanlage dahingehend zu verbessern, dass die Zeit zum Erreichen eines bestimmten vorgegebenen Sollwerts, beziehungsweise zum Erfüllen einer Energiebereitstellungsanforderung besonders gering ist.

Bei herkömmlichen Steuerverfahren für eine Vielzahl von Energieerzeugern einer Energieversorgungsanlage werden die einzelnen Energieerzeuger sequentiell entlang einer vorab festgelegten Reihenfolge ein- beziehungsweise ausgeschaltet. Das Einschalten des in der Reihenfolge nächsten Energieerzeugers erfolgt immer dann, wenn der momentane Energiebedarf nicht mehr durch die bereits eingeschalteten Energieerzeuger erfüllt werden kann. Entsprechend werden Energieerzeuger ausgeschaltet, wenn die bereitgestellte Energiemenge den angeforderten Bedarf überschreitet. Hierbei kann es dazu kommen, dass ein nur sehr langsam einschaltbarer und/oder regelbarer Energieerzeuger ein Einschalten eines folgenden Energieerzeugers in der Reihenfolge blockiert, so dass eine sehr lange Zeit nötig sein kann, um einen Bedarf zu erfüllen.

Bei einem weiteren bekannten Steuerverfahren für eine Vielzahl von Energieerzeugern einer Energieversorgungsanlage werden die einzelnen Energieerzeuger unabhängig voneinander (parallel) ein- und/oder ausgeschaltet und geregelt. Die Steuerung erfolgt somit völlig unkoordiniert. Restriktionen beziehungsweise spezifische Eigenschaften einzelner Energieerzeuger können bei der Steuerung der Energieversorgungsanlage nicht berücksichtigt werden.

Das erfindungsgemäße Steuerverfahren zielt darauf ab, die Vorteile einer sequentiellen Steuerung mit denen einer parallelen Steuerung von Energieerzeugern zu kombinieren. Dazu werden die Energieerzeuger in Gruppen eingeteilt, wobei innerhalb einer Gruppe eine variable Reihenfolge festgelegt wird. Ferner kann eine als Kaskade bezeichnete Reihenfolge von Gruppen festgelegt werden, wobei eine Kaskade eine oder mehrere Gruppen umfasst. Einzelne Kaskaden können parallel zueinander gesteuert werden. Hiermit wird erreicht, dass mehrere parallel zueinander steuerbare Reihenfolgen festgelegt werden können. Hierdurch kann die Steuerung einer multivalenten Energieversorgungsanlage besonders gut auf sich ändernde Bedingungen reagieren. Ferner können unterschiedliche spezifische Eigenschaften der Energieerzeuger besonderes gut miteinander kombiniert und das Ein- und/oder Ausschalten der Energieerzeuger besonders gut koordiniert werden.

Durch ein Einteilen der Energieerzeuger einer multivalenten Energieversorgungsanlage in Gruppen kann erreicht werden, dass die Energieerzeuger besonders gleichmäßig betrieben werden. Hierdurch kann ein besonders schonender Betrieb und eine hohe Lebensdauer der Energieerzeuger ermöglicht werden. Durch das erfindungsgemäße Einteilen der Energieerzeuger in Gruppen, das in Abhängigkeit der durch die Energieerzeuger verwendeten Energieträger erfolgen kann, kann der Betrieb der multivalenten Energieversorgungsanlage von der Verfügbarkeit der verschiedenen Energieträger unabhängiger werden, da eine schwankender Verfügbarkeit eines Energieträgers durch einen weiteren Energieträger ausgeglichen werden kann.

Die Lösung der Aufgabe gelingt durch Angeben eines Verfahrens zum Steuern einer multivalenten Energieversorgungsanlage mit mindestens zwei Energieerzeugern, die mindestens zwei verschiedene Energieträger nutzen, um Energie in Form von Wärme und/oder Kälte und/oder elektrischer Energie bereitzustellen. Jeder Energieerzeuger umfasst eine Regeleinrichtung zum Regeln von Regelgrößen des Energieerzeugers. Die multivalente Energieversorgungsanlage umfasst ferner eine Steuereinrichtung zum koordinierten Steuern der Regeleinrichtungen.

Erfindungsgemäß erfasst die Steuereinrichtung mindestens eine Energiebereitstellungsanforderung für jeweils mindestens eine Energieform Wärme und/oder Kälte und/oder elektrische Energie. Ferner legt die Steuereinrichtung eine Einteilung der Energieerzeuger in Gruppen gemäß einer spezifischen Eigenschaft der Energieerzeugerfest, wobei Jeder Energieerzeuger für jede Energieform, die er bereitstellt, genau einer Gruppe zugeordnet wird. Jeder Energieerzeuger wird also mindestens einer Gruppe zugeordnet. Je Energieform kann ein Energieerzeuger aber höchstens einer Gruppe zugeordnet werden.

Die Steuereinrichtung bestimmt für jeden Energieerzeuger Sollwerte zum Erfüllen der mindestens einen Energiebereitstellungsanforderung in Abhängigkeit der Einteilung der Energieerzeuger in Gruppen und gibt die Sollwerte an die Regeleinrichtungen aus. Eine Energiebereitstellungsanforderung kann der Steuereinrichtung entweder von außen vorgegeben oder durch die Steuereinrichtung selbst erzeugt werden.

Im Sinne der Erfindung ist ein Energieerzeuger "eingeschaltet", wenn die von dem Energieerzeuger bereitgestellte Leistung einen vorgegebenen Leistungs-Schwellenwert überschreitet. Zum "Einschalten" eines Energieerzeugers wird also die von dem Energieerzeuger bereitgestellte Leistung so weit erhöht, bis die von dem Energieerzeuger bereitgestellte Leistung größer ist als der vorgegebene Leistungs-Schwellenwert.

Im Sinne der Erfindung ist ein Energieerzeuger "ausgeschaltet", wenn die von dem Energieerzeuger bereitgestellte Leistung einen vorgegebenen Leistungs-Schwellenwert unterschreitet. Zum "Ausschalten" eines Energieerzeugers wird also die von dem Energieerzeuger bereitgestellte Leistung so weit abgesenkt, bis die von dem Energieerzeuger bereitgestellte Leistung kleiner ist als der vorgegebene Leistungs-Schwellenwert.

Koordiniertes Steuern der Regeleinrichtungen bedeutet, dass die Steuereinrichtung beim Bestimmen der Sollwerte die Gesamtheit der Energieerzeuger in der Energieversorgungsanlage berücksichtigt. Dies kann beinhalten, dass bei gleichzeitigem Vorliegen einer Vielzahl von Energiebereitstellungsanforderungen für verschiedene Energieformen zu berücksichtigen ist, welcher Energieerzeuger welche Energieform(en) bereitstellen kann. Ferner kann es nötig sein, dass die Steuereinrichtung bestimmt, ob mehrere Energieerzeuger erforderlich sind, um die Energiebereitstellungsanforderung(en) zu erfüllen. Beim Auswählen der Energieerzeuger zum Erfüllen der Energiebereitstellungsanforderung(en) kann die Steuereinrichtung zudem beachten, wie viel Zeit die unterschiedlichen Energieerzeuger benötigen, um einen bestimmten Sollwert zu erreichen und/oder ob Restriktionen bezüglich der Verfügbarkeit eines durch die Energieerzeuger genutzten Energieträgers vorliegen.

Um ein koordiniertes Steuern der Regeleinrichtungen zu ermöglichen kann die Steuereinrichtung dafür ausgelegt sein, eine Vielzahl von spezifischen Eigenschaften der Energieerzeuger zu erfassen und gegebenenfalls miteinander zu vergleichen und/oder Abhängigkeiten zwischen den Energieerzeugern zu erkennen und zu berücksichtigen. Insbesondere können spezifische Eigenschaften hinsichtlich der Leistungsabgabe der Energieerzeuger bei der Steuerung der Energieversorgungsanlage berücksichtigt werden. Spezifische Eigenschaften hinsichtlich der Leistungsabgabe umfassen unter anderem eine maximal durch den Energieerzeuger bereitstellbare Leistung und die Zeit, die der Energieerzeuger benötigt, um einen ausgeschalteten in einen optimalen Betriebszustand überzugehen.

Durch die Einteilung der Energieerzeuger in Gruppen kann die Regelgüte der multivalenten Energieversorgungsanlage verbessert werden. Außerdem kann durch die Einteilung in Gruppen die Steuerung und/oder das Konfigurieren von sehr komplexen multivalenten Energieversorgungsanlage vereinfacht werden. Ferner kann ein besonders wirtschaftlicher Betrieb einer multivalenten Energieversorgungsanlage ermöglicht werden, da auch spezifische Eigenschaften der jeweils genutzten Energieträger berücksichtigt werden können.

Die Lösung der Aufgabe gelingt ferner durch Bereitstellen einer Steuereinrichtung zum Steuern einer multivalenten Energieversorgungsanlage mit mindestens zwei Energieerzeugern, die mindestens zwei verschiedene Energieträger nutzen, um Energie in Form von Wärme und/oder Kälte und/oder elektrischer Energie bereitzustellen. Jeder Energieerzeuger umfasst eine Regeleinrichtung zum Regeln von Regelgrößen des Energieerzeugers. Erfindungsgemäß erfasst die Steuereinrichtung mindestens eine Energiebereitstellungsanforderung für jeweils mindestens eine Energieform Wärme und/oder Kälte und/oder elektrische Energie. Ferner legt die Steuereinrichtung eine Einteilung der Energieerzeuger in Gruppen gemäß einer spezifischen Eigenschaft der Energieerzeuger fest, wobei jeder Energieerzeuger genau einer Gruppe zugeordnet wird. Die Steuereinrichtung bestimmt für jeden Energieerzeuger Sollwerte zum Erfüllen der mindestens einen Energiebereitstellungsanforderung in Abhängigkeit der Einteilung der Energieerzeuger in Gruppen und gibt die Sollwerte an die Regeleinrichtungen aus.

Das Steuern von multivalenten Energieversorgungsanlagen kann sehr komplex sein und erfordert in der Regel eine auf die konkrete Anlagenkonfiguration angepasste, maßgeschneiderte Lösung, wie zum Beispiel eine Speicherprogrammierbare Steuerung. Der Entwicklungsaufwand und die damit verbundenen Kosten zum Bereitstellen einer Anlagensteuerung können je nach Komplexität der Energieversorgungsanlage sehr hoch ausfallen. Außerdem kann bei der Installation einer Energieversorgungsanlage die Konfiguration einer entsprechenden Steuerungsehr kompliziert und zeitintensiv sein. Ziel der Erfindung ist es daher, Verfahren bereitzustellen, die es erlauben eine Vielzahl verschiedener multivalenter Energieversorgungsanlagen mit unterschiedlichen Infrastrukturen und/oder Komponenten optimal zu steuern. Außerdem soll eine Steuereinrichtung bereitgestellt werden, die eine Vielzahl verschiedener multivalenter Energieversorgungsanlagen optimal steuern kann.

Eine multivalente Energieversorgungsanlage ist eine Energieversorgungsanlage, die in Summe mehr als einen Energieträger als Energiequelle verwendet. Sie weist mindestens zwei Energieerzeuger auf, die jeweils mindestens eine nutzbare Energieform, wie zum Beispiel Wärme, Kälte, mechanische Energie und/oder elektrische Energie bereitstellen. Wärme kann beispielsweise für eine Warmwasserversorgung und/oder eine Heizungsanlage und/oder als Prozesswärme, beispielsweise für industrielle Anwendungen bereitgestellt werden. Zum Transportieren der Wärme wird üblicherweise ein fluides Trägermedium, also ein Gas oder eine Flüssigkeit verwendet, beispielweise Wasser oder Wasserdampf.

Um eine multivalente Energieversorgungsanlage optimal zu betreiben, muss die Steuerung der Energieversorgungsanlage in Abhängigkeit der spezifischen Eigenschaften der Energieerzeuger, die unter anderem von der Art des genutzten Energieträgers abhängen, erfolgen. Die vorliegende Erfindung zielt darauf ab, diese spezifischen Eigenschaften in synergetischer Weise miteinander zu kombinieren. In anderen Worten ausgedrückt erlaubt es das erfindungsgemäße Verfahren, die jeweiligen Vorteile verschiedener Energieträger optimal miteinander zu kombinieren. Dies gelingt durch eine koordinierte Steuerung der Energieerzeuger, so dass aus der Multivalenz der Energieversorgungsanlage ein Zusatznutzen erzielt werden kann.

Insbesondere kann eine multivalente Energieversorgungsanlage eine Kombination aus regenerativen und fossilen Energieträgern verwenden, so dass gleichzeitig ein besonders zuverlässiger Betrieb der Energieversorgungsanlage erreicht werden kann, da eine schwankende Verfügbarkeit eines Energieträgers durch die Verwendung mindestens eines weiteren Energieträgers ausgeglichen werden kann. Hierdurch erlaubt es das erfindungsgemäße Verfahren, dass die Steuerung der Energieversorgungsanlage auf sich ändernde Bedingungen reagieren kann.

Die mindestens zwei Energieerzeuger der multivalenten Energieversorgungsanlage nutzen in Summe mindestens zwei verschiedene Energieträger. Als Energieträger können fossile und/oder regenerative Energieträger zum Einsatz kommen. Beispielsweise können zwei oder mehr aus der folgenden Liste verwendet werden: Kohle, Erdgas, Heizöl, Diesel, Benzin, Wasserstoff, Biogas, Holz (zum Beispiel in Form von Pellets und/oder Hackschnitzeln) oder andere Arten von Biomasse, geothermische Energie, Sonnenstrahlung, Wind, elektrische Energie (zum Beispiel elektrischer Strom und/oder elektrische Spannung), Fernwärme, mechanische Energie (zum Beispiel Wasserkraft). Durch die Verwendung verschiedener Energieträger kann beispielsweise die Zuverlässigkeit der Energieversorgung verbessert werden, indem die Abhängigkeit von der (zeitlichen) Verfügbarkeit eines Energieträgers (wie zum Beispiel Sonne und/oder Wind) verringert wird.

Die erfindungsgemäße multivalente Energieversorgungsanlage weist mindestens zwei Energieerzeuger auf, die jeweils mindestens einen der zuvor genannten Energieträger nutzen, um Energie in Form von Wärme, Kälte und/oder elektrischer Energie bereitzustellen. Beispielsweise werden zwei oder mehr Energieerzeuger aus der folgenden Liste, die eine nicht abschließende Aufzählung ist, verwendet: Ölheizkessel, Gasheizkessel, Heizwertkessel, Brennwertkessel, Gasmotor, Gasturbine, Blockheizkraftwerk (BHKW), Holzkessel, elektrische Wärmepumpe, Photovoltaikanlage, Windturbine, thermischer Sonnenkollektor, Brennstoffzelle. Außerdem kann eine Wärme-Kraft-Kopplung, beispielsweise mit einem Stirlingmotor Implementiert sein. Ferner kann auch ein Pufferspeicher als Energieerzeuger betrachtet werden.

Die verschiedenen Energieerzeuger können sehr unterschiedliche spezifische Eigenschaften aufweisen und dementsprechend unterschiedliche oder sogar gegensätzliche Anforderungen bei deren Betrieb in einer multivalenten Energieversorgungsanlage stellen. Im Folgenden werden typische spezifische Eigenschaften einiger ausgewählter Energieerzeuger bespielhaft beschrieben.

Ein Ölheizkessel beziehungsweise Gasheizkessel nutzt die fossilen Energiequellen Heizöl beziehungsweise Erdgas und liefert Wärme, die üblicherweise auf ein fluides Trägermedium, meistens Wasser, übertragen wird. Er kann innerhalb kurzer Zeit hohe Leistungen liefern und auch schnell ausgeschaltet werden. Ein solcher Heizkessel kann besonders gut regelbar sein. Ferner kann er eine besonders hohe Regeldynamik aufweisen und daher im modulierenden Betrieb verwendet werden. Ein Heizkessel erlaubt zudem häufiges Ein- und Ausschalten und kann daher auch zweistufig im Ein-/Ausschaltbetrieb eingesetzt werden. Ölheizkessel und Gasheizkessel sind somit in ihrem Betrieb besonders flexibel einsetzbar und werden häufig als sogenannte Spitzenlastkessel verwendet, die schnell auf Schwankungen von Energiebereitstellungsanforderungen reagieren sollen. Die Energiegesamtkosten, welche die Kosten des Energieträgers selbst sowie die Kosten der Wartung und die Investitionskosten für den Heizkessel berücksichtigen, bewegen sich im Vergleich mit anderen Energieerzeugern auf mittlerem Niveau. Ölheizkessel und Gasheizkessel können jeweils als Brennwertkessel oder Heizwertkessel ausgeführt sein.

Ein Blockheizkraftwerk (BHKW) nutzt üblicherweise fossile Energiequellen, könnte aber auch mit Biogas oder Wasserstoff, der aus regenerativen Quellen stammt, betrieben werden. Es liefert Wärme und elektrische Energie (zum Beispiel elektrischen Strom und/oder elektrische Spannung), ist gut regelbar und kann schnell auf hohe Leistungen hochgefahren und auch schnell wieder runtergefahren werden. Im Unterschied zum Heizkessel soll das BHKW aber nicht häufig einbeziehungsweise ausgeschaltet werden. Um ein BHKW wirtschaftlich zu betreiben wird ist es in der Regel im Dauerbetrieb eingesetzt. Trotz hoher Investitionskosten kommt das BHKW insgesamt somit auf relativ niedrige Energiegesamtkosten.

Ein Holzkessel nutzt festen Brennstoff aus einer nachwachsenden Energiequelle (Holz, zum Beispiel in Form von Pellets oder Hackschnitzel) und liefert Wärme. Er ist nur mäßig regelbar und kann nur relativ langsam auf hohe Leistungen hochgefahren beziehungsweise wieder runtergefahren werden. Aufgrund der langen Schaltzeiten soll ein Holzkessel nicht häufig einbeziehungsweise ausgeschaltet werden. Beim Ausschalten muss schon aus Sicherheitsgründen üblicherweise abgewartet werden, bis der bereits in der Brennkammer befindliche Brennstoff vollständig verbrannt ist. Beim Einschalten muss hingegen zunächst ausreichend Brennstoff in die Brennkammer transportiert und entzündet werden. Er verursacht relativ niedrige Energiegesamtkosten. Daher wird er meist als Grundlastkessel verwendet, der möglichst kontinuierlich in Betrieb ist und eine Mindestenergieanforderung einer Energieversorgungsanlage erfüllen kann. Um auf Schwankungen in der angeforderten Energiemenge reagieren zu können, wird ein Holzkessel meist in Kombination mit einem Pufferspeicher verwendet, der die vom Holzkessel bereitgestellte Wärme zwischenspeichert, wenn die von den Verbrauchern geforderte Wärmemenge kleiner als die vom Holzkessel bereitgestellte Wärmemenge ist. Ist die von den Verbrauchern geforderte Wärmemenge größer als die vom Holzkessel bereitgestellte Wärmemenge, kann zunächst die gespeicherte Wärmemenge vom Pufferspeicher wieder abgegeben werden. Alternativ oder zusätzlich zum Pufferspeicher wird häufig ein Gasheizkessel zusammen mit Holzkesseln in einer Energieversorgungsanlage verwendet. Der Gasheizkessel wird dann eingeschaltet, wenn die geforderte Wärmemenge die vom Holzkessel und vom Pufferspeicher verfügbare Wärmemenge überschreitet. Der Gasheizkessel wird also als Spitzenlastkessel benutzt. Meist werden Holzkessel paarweise betrieben, damit stets mindestens einer der beiden Holzkessel betriebsbereit ist.

Eine elektrische Wärmepumpe verbraucht elektrische Energie und nutzt daher, je nachdem aus welcher Quelle die elektrische Energie gewonnen wurde, fossile und/oder regenerative Energiequellen. Sie kann Wärme und/oder Kälte liefern, hat jedoch einen eingeschränkten Temperaturbereich. Üblicherweise kann eine Wärmepumpe eine maximale Vorlauftemperatur von 60°C bereitstellen. Sie ist gut regelbar und kann schnell auf hohe Leistungen hochgefahren und auch schnell wieder runtergefahren werden. Allerdings darf sie nicht häufig ein- beziehungsweise ausgeschaltet werden. Sie verursacht relativ niedrige Energiegesamtkosten.

Eine weitere Komponente, die in vielen multivalenten Energieversorgungsanlagen verwendet wird ist ein Pufferspeicher. Der Pufferspeicher kann von Energieerzeugern bereitgestellte Energie zeitlich Zwischenspeichern. Je nach Energieform kann ein Pufferspeicher zum Beispiel ein Speicher für elektrische Energie, beispielsweise in Form von Akkus oder Kondensatoren, oder ein Wärmespeicher und/oder Kältespeicher, beispielsweise in Form eines isolierten Wassertanks, sein. Außerdem kann Energie auch in Form von mechanischer Energie gespeichert werden, zum Beispiel in einem Schwungrad. Ein Pufferspeicher erlaubt das zumindest teilweise Entkoppeln des Betriebs der Energieerzeuger von den Energieverbrauchern. Hierdurch kann der Wirkungsgrad einer multivalenten Energieversorgungsanlage verbessert werden. Ein Pufferspeicher kann bei der Steuerung einer Energieversorgungsanlage ebenfalls als Energieerzeuger betrachtet werden.

Erfindungsgemäß kann die multivalente Energieversorgungsanlage dafür ausgelegt sein, Energie in Form von Wärme, Kälte und/oder elektrischer Energie bereitzustellen. Für jede Energieform kann mindestens eine Energiebereitstellungsanforderung vorliegen. Energiebereitstellungsanforderungen können für jede Energieform unabhängig voneinander durch die Steuerungseinrichtung erfasst werden und in entsprechende Sollwert-Forderungen an Energieerzeuger weiterverarbeitet werden. Eine Energiebereitstellungsanforderung kann beispielsweise von einem Verbraucher, einer Vielzahl von Verbrauchern oder einer externen oder internen Vorrichtung kommen, die Anforderungen einer Vielzahl von Verbrauchern koordiniert. Für jede Energieform können außerdem Kriterien für Energieerzeuger, die der entsprechenden Energieform zugeordnet sind, festgelegt werden.

Ferner kann für eine Energieform auch mehr als eine Energiebereitstellungsanforderung vorliegen. Hierzu können einen oder mehrere Energieform(en), beispielsweise in Abhängigkeit der Anbindung der Energieerzeuger und/oder der in den Verbraucherkreisläufen vorhandenen Verbraucherarten, unterteilt werden. Dies kann zum Beispiel dazu dienen, um die (physikalische) Energieform Wärme an verschiedene Verbraucherkreisläufe mit unterschiedlichen Anforderungen zu liefern. Die von der Energiebereitstellungsanforderung betroffenen Energieerzeuger können hierbei auch an voneinander getrennte Verbraucherkreisläufe angebunden sein. Alternativ kann mittels Ventilen, Drosselklappen und/oder Schaltern zwischen verschiedenen Verbraucherkreisläufen umgeschaltet werden.

Für die Energieform Wärme können beispielsweise dann verschiedene Energiebereitstellungsanforderungen vorliegen, wenn für die Warmwasserbereitstellung (Trinkwasser) und Heizung und/oder Prozesswärme (Brauchwasser beziehungsweise Dampf) unterschiedliche Vorlauftemperaturen angefordert werden.

Die Einteilung in die Energieformen Wärme, Kälte und elektrische Energie kann auch durch weitere Energieformen ergänzt werden. Ferner kann eine Energieform auch nutzungsabhängig Unterteil werden. Beispielsweise kann die Energieform Wärme in Warmwasser, Heizungswärme und/oder Warmluft aufgeteilt werden. Die Energieform Kälte kann beispielsweise in eine Gebäudekühlung (zum Beispiel Klimaanlage mit Frischluftzufuhr) und eine Gerätekühlung (zum Beispiel Kühlmittel zur Kühlung von Maschinen) aufgeteilt werden.

Da es in der multivalenten Energieversorgungsanlage Energieerzeuger geben kann, die gleichzeitig mehr als eine Energieform bereitstellen können, kann es nötig sein, festzulegen, unter welchen Voraussetzungen solche Energieerzeuger ein- und/oder ausgeschaltet und/oder geregelt oder gesteuert werden sollen. Die Steuereinrichtung kann bei der Steuerung der Energieerzeuger bestimmte Energieformen priorisieren, so dass eine Energiebereitstellungsanforderung für eine erste Energieform gegenüber einer Energiebereitstellungsanforderung einer zweiten Energieform bevorzugt behandelt wird. Die Prioritäts-Reihenfolge kann beispielsweise manuell von einem Benutzer festgelegt werden. Die Steuereinrichtung kann also Energiebereitstellungsanforderungen in Abhängigkeit der betreffenden Energieform erfassen und verarbeiten.

Beispielsweise liefert ein BHKW sowohl Wärme als auch elektrische Energie (elektrische Strom und/oder elektrische Spannung). Folglich können für ein BHKW zwei unterschiedliche Forderungen aus den beiden Energieformen vorliegen. Da die vom BHKW bereitgestellte elektrische Energie aber bei Nichtvorliegen einer entsprechenden Forderung der durch die multivalente Energieversorgungsanlage versorgten Verbraucher jederzeit in ein öffentliches Stromnetz eingespeist werden kann, wird das BHKW üblicherweise im Dauerbetrieb eingesetzt.

Die Energieform Wärme umfasst alle Energieerzeuger, die Wärmeenergie bereitstellen können. Zudem berücksichtigt die Steuereinheit für die Energieform Wärme Bedingungen zum Einschalten und/oder Ausschalten, die einen Bezug zu einer Energiebereitstellungsanforderung von Wärme haben, zum Beispiel eine geforderte Anlagenvorlauftemperatur und/oder eine Puffertemperatur. In ähnlicher Weise werden Energieerzeuger den Energieformen elektrische Energie und Kälte zugeordnet.

Insbesondere kann ein Energieerzeuger mehr als eine Form von Energie bereitstellen und somit auch mehr als einer Energieform zugeordnet sein. Liegen Energiebereitstellungsanforderungen für mehr als eine Energieform vor, die denselben Energieerzeuger betreffen könne, so entscheidet die Steuereinrichtung, welche Anforderung für den jeweiligen Energieerzeuger Priorität behandelt werden soll. Hiermit kann vermieden werden, dass eine Anforderung aus einer Energieform dazu führt, dass ein Energieerzeuger ausgeschaltet wird, obwohl eine andere Energieform eine Anforderung zum Betreiben des Energieerzeugers generiert.

Jeder Energieerzeuger in der Energieversorgungsanlage weist eine Regeleinrichtung zum Regeln von Regelgrößen des Energieerzeugers auf. Regelgrößen eines Energieerzeugers umfassen beispielsweise eine Kesseltemperatur des Energieerzeugers, einen Volumen- und/oder Massenstrom eines Trägermediums durch den Energieerzeuger, eine Temperatur des Trägermediums am Vorlauf und/oder am Rücklauf des Energieerzeugers, eine Leistungsaufnahme des Energieerzeugers und/oder eine Leistungsabgabe des Energieerzeugers. Bei einem Energieerzeuger, der elektrische Energie bereitstellt, können die Regelgrößen einen elektrischen Strom, eine elektrische Leistung und/oder eine elektrische Spannung betreffen.

Die Regeleinrichtungen werden von einer Steuereinrichtung koordiniert, die den Regeleinrichtungen übergeordnet ist. Die Steuereinrichtung ist dafür ausgelegt, eine Energiebereitstellungsanforderung für Energie in Form von Wärme und/oder Kälte und/oder elektrischer Energie zu erfassen. Eine Energiebereitstellungsanforderung kann beispielsweise eine Anforderung nach einer bestimmten Vorlauftemperatur oder eine bestimmte Temperatur in einem Pufferspeicher, insbesondere in einem bestimmten Bereich des Pufferspeichers, sein oder eine elektrische Leistung sein. Die Energiebereitstellungsanforderung kann beispielsweise von einem Verbraucher oder einem Verbund von Verbrauchern erzeugt werden und über eine geeignete Datenkommunikationsverbindung an die Steuereinrichtung ausgegeben werden.

Die Steuereinrichtung ist ferner dafür ausgelegt, für jeden Energieerzeuger Sollwerte zum Erfüllen der Energiebereitstellungsanforderung in Abhängigkeit des jeweils genutzten Energieträgers zu bestimmen, wobei die Sollwerte auch Anweisungen zum Einschalten oder Ausschalten eines Energieerzeugers umfassen.

Die Steuereinrichtung ist ferner dafür ausgelegt, die Sollwerte an die Regeleinrichtungen auszugeben. Zum Kommunizieren mit den Regeleinrichtungen nutzt die Steuereinrichtung eine geeignete Datenkommunikationsverbindung.

Die verschiedenen in der Energieversorgungsanlage genutzten Energieträger können beispielsweise aufgrund unterschiedlicher Kosten und/oder schwankender Verfügbarkeit Anforderungen an die Energieversorgungsanlage stellen. Um einen möglichst ununterbrochenen Betrieb der Energieversorgungsanlage sicherzustellen bestimmt die Steuereinrichtung die Sollwerte für die Energieerzeuger zum Beispiel in Abhängigkeit der aktuellen und/oder auch einer für die Zukunft berechneten, vorgegebenen oder geschätzten Verfügbarkeit der genutzten Energieträger.

Beispielsweise kann die Steuereinrichtung dafür ausgelegt sein, bevorzugte Energieerzeuger, die zum Beispiel besonders kostengünstige und/oder regenerative Energieträger nutzen, mit hoher beziehungsweise maximaler Leistung zu betreiben. Nicht bevorzugte Energieerzeuger, die zum Beispiel weniger kostengünstige und/oder fossile Energieträger nutzen und zur Abdeckung der Lastspitzen vorgesehen sind, sollen nicht zum Speichern von Wärme in einem Pufferspeicher eingesetzt werden. Bevorzugte Energieerzeuger dürfen den Pufferspeicher nutzen, um höhere Laufzeiten beziehungsweise weniger Schaltvorgänge zu realisieren.

Die erfindungsgemäße Steuereinrichtung einer multivalenten Energieversorgungsanlage kann den Regeleinrichtungen der Energieerzeuger Sollwerte vorgeben und/oder Schaltforderungen erteilen. Neben den Schaltforderungen, die festlegen, ob ein Energieerzeuger ein- oder ausgeschaltet sein muss, kann die Steuereinrichtung aber auch Freigaben erteilen, die ein Einschalten oder Ausschalten eines Energieerzeugers erlauben, aber nicht erzwingen.

Alleine das gezielte Ein- und Ausschalten von Energieerzeugern durch die Steuereinrichtung wäre nicht ausreichend, um die Energiebereitstellungsanforderung zu erfüllen, denn durch das Schalten alleine wird nicht definiert, mit welchem Modulationsgrad bei welchem Temperaturniveau der freigegebene Energieerzeuger arbeiten soll. Hieraus folgt, dass Sollwertvorgaben durch die Steuereinrichtung erforderlich sind.

Die unterschiedlichen Regelgrößen einer Energieversorgungsanlage (zum Beispiel Anlagenvorlauftemperatur, Puffertemperatur), erfordern, dass individuelle Sollwertvorgaben an die einzelnen Energieerzeuger nötig sind. Daneben sollen auch Randbedingungen berücksichtigt werden. Diese Randbedingungen können zum Beispiel Regelstrategien, festgelegte bevorzugte Energieerzeuger und/oder eine Pufferdynamik umfassen.

Das gezielte Freigeben von Energieerzeugern ist nicht ausreichend, um beispielsweise eine Anlagenvorlauftemperatur und/oder eine Puffertemperatur auf ein gewünschtes Niveau mit einer erforderlichen Leistung zu regeln. Denn durch die Freigabe wird nicht definiert, welche Leistung bei welchem Temperaturniveau der jeweils freigegebene Energieerzeuger liefern soll. Daher sind zusätzliche Sollwertvorgaben erforderlich. In einer multivalenten Energieversorgungsanlage können unterschiedliche Energieerzeuger mit individuellen erzeugerspezifischen Restriktionen (zum Beispiel Minimal- und Maximalwerte der Leistung, des Volumenstroms oder der Laufzeiten) vertreten sein. Zusätzlich erlauben die umfangreichen Konfigurationsmöglichkeiten, dass Energieerzeuger auf jeweils unterschiedliche Regelgrößen (zum Beispiel Anlagenvorlauftemperatur, Pufferladezustand) arbeiten. Diese Umstände erfordern, dass jeder Energieerzeuger neben der Freigabe oder Schaltforderung individuelle Sollwerte erhält.

Vorzugsweise weist jede Regeleinrichtung eines jeden Energieerzeugers eine Schnittstelle auf, um Sollwerte von der Steuereinrichtung zu empfangen. Die Regeleinrichtungen wirken über geeignete Aktoren auf die Energieerzeuger ein, um die Regelgrößen auf den entsprechenden Sollwert zu regeln. Die Regelgrößen umfassen beispielsweise: eine (elektrische und/oder Wärme- und/oder Kühl-) Leistung, die der Energieerzeuger in die Energieversorgungsanlage einbringt, einen Volumen- oder Massenstrom (oder elektrischer Strom) vom Energieerzeuger in die Energieversorgungsanlage, eine Energieerzeugervorlauftemperatur (eine elektrische Spannung).

Die Steuereinrichtung kann nicht direkt auf diese Regelgrößen wirken sondern gibt lediglich Sollwerte an eine Regeleinrichtung aus. Das Regeln der Regelgrößen auf die Sollwerte bleibt im Verantwortungsbereich der Regeleinrichtungen. Die Steuereinrichtung kann einer Regeleinrichtung anstatt eines festen Sollwerts auch einen Arbeitsbereich (jeweils durch eine obere und untere Restriktion beziehungsweise einen Schwellenwert) vorgeben, in dem die Regelgrößen von der Regeleinrichtung eingestellt werden können. Ein von der Steuereinrichtung festgelegter Arbeitsbereich kann dementsprechend durch einen oder mehrere Sollwerte definiert werden, welche Minimal- und/oder Maximalwerte für die Regelgrößen festlegen. Regelgrößen sind beispielsweise:
Eine maximale thermische oder elektrische Leistung (beziehungsweise Wärmeleistung, Kälteleistung) des Energieerzeugers, die nicht überschritten werden darf. Die Forderung erfolgt zum Beispiel in Prozent in Relation zur physikalisch möglichen Maximalleistung des betreffenden Energieerzeugers.

Eine minimale thermische oder elektrische Leistung (beziehungsweise Wärmeleistung, Kälteleistung) des Energieerzeugers, die nicht unterschritten werden darf. Die Forderung erfolgt zum Beispiel in Prozent in Relation zur physikalisch möglichen Maximalleistung des betroffenen Energieerzeugers.

Ein maximaler Volumenstrom (oder Massenstrom oder elektrischer Strom) des Energieerzeugers, der vom beziehungsweise durch den Energieerzeuger in die Energieversorgungsanlage fließt. Die Forderung erfolgt zum Beispiel in Prozent in Relation zum physikalisch möglichen maximalen Strom des betreffenden Energieerzeugers.

Ein minimaler Volumenstrom (oder Massenstrom oder elektrischer Strom) des Energieerzeugers, der vom beziehungsweise durch den Energieerzeuger in die Energieversorgungsanlage fließt. Die Forderung erfolgt zum Beispiel in Prozent in Relation zum physikalisch möglichen maximalen Strom des betreffenden Energieerzeugers.

Eine (minimale und/oder maximale) Energieerzeugervorlaufsolltemperatur oder elektrische Spannung. Die Forderung erfolgt in Grad Celsius beziehungsweise Volt. Die konkreten Werte, die die Steuereinrichtung an die Regeleinrichtungen der Energieerzeuger sendet, werden im Folgenden auch als Sollwerte bezeichnet.

Vorteilhafte Aus- und Weiterbildungen, welche einzeln oder in Kombination miteinander eingesetzt werden können, sind Gegenstand der abhängigen Ansprüche.

Vorzugsweise werden die Gruppen von Energieerzeugern in Kaskaden eingeteilt. Das Einteilen kann In Abhängigkeit mindestens einer der Gruppe spezifischen Eigenschaft der Energieerzeuger erfolgen. Jede Gruppe wird genau einer Kaskade zugeordnet. Falls eine Kaskade mehr als eine Gruppe umfasst, wird eine sequenzielle Reihenfolge der Gruppen In der Kaskade festgelegt.

Eine Kaskade ist somit eine Ebene der Einteilung der Energieerzeuger, die den Gruppen übergeordnete ist. Eine Kaskade legt jeweils eine sequenzielle Reihenfolge der in ihr enthaltenen Energieerzeuger fest. Kaskaden sind jedoch unabhängig voneinander steuerbar. Somit können mehrere parallel ausführbare sequenzielle Reihenfolgen von Energieerzeugern definiert werden, wobei jeweils unterschiedliche Kriterien für das Einschalten und/oder Ausschalten festgelegt werden können.

Das Einteilen der Gruppen in Kaskaden kann beispielsweise in Abhängigkeit dynamischer Eigenschaften der Energieerzeuger und/oder in Abhängigkeit einer physischen Anordnung, zum Beispiel einer hydraulischen Anbindung, der Energieerzeuger in der multivalenten Energieversorgungsanlage erfolgen. Hiermit kann erreicht werden, dass Energieerzeuger, die viel Zeit benötigen, um einen optimalen Betriebszustand zu erreichen, möglichst dauerhaft im Einsatz sind, und Energieerzeuger, die nur wenig Zeit zum Erreichen eines optimalen Betriebszustands beziehungsweise zum Ausschalten benötigen, nur in den Lastspitzen eingeschaltet werden.

Umfasst eine Kaskade mehr als eine Gruppe kann eine Reihenfolge der Gruppen innerhalb der Kaskade festgelegt werden. Das Festlegen der Reihenfolge kann wiederum in Abhängigkeit spezifischer Eigenschaften der Energieerzeuger, beziehungsweise in Abhängigkeit einer Eigenschaft, die den Energieerzeugern einer Gruppe gemeinsam ist, erfolgen. So kann beispielweise eine Einteilung der Energieerzeuger in Gruppen nach den jeweils genutzten Energieträgern erfolgen. Die Reihenfolge der Gruppen in einer Kaskade kann dann zum Beispiel in Abhängigkeit einer Verfügbarkeit oder der Kosten der Energieträger erfolgen. So kann sichergestellt werden, dass kostengünstige Energieträger bevorzugt verwendet werden. Gleichzeitig können Laufzeitunterschiede zwischen gleichartigen Energieerzeugern innerhalb einer Gruppe ausgeglichen werden.

Die Reihenfolge der Gruppen innerhalb einer Kaskade kann statisch sein. Die Reihenfolge der Gruppen innerhalb einer Kaskade wird daher vorzugsweise anhand von Eigenschaften der Energieerzeuger festgelegt, die sich nicht zeitlich ändern, wie zum Beispiel die Art des verwendeten Energieträgers. Die Reihenfolge der Energieerzeuger innerhalb einer kann Gruppe variabel sein. Die Reihenfolge der Energieerzeuger innerhalb einer Gruppe wird daher vorzugsweise anhand von Eigenschaften der Energieerzeuger festgelegt, die sich zeitlich ändern, wie zum Beispiel die Laufzeit des Energieerzeugers (Betriebsstunden) und/oder die verbleibende Zeit bis zur nächsten Wartung oder die abgelaufene Zeit seit der letzten Wartung.

In jeder Gruppe ist eine Sequenz von Energieerzeugern festgelegt, wobei die Sequenz in Abhängigkeit von Regelgrößen der Energieerzeuger variabel sein kann. Beim Ändern der Reihenfolge von Energieerzeugern innerhalb einer Gruppe werden die Energieerzeuger an eine andere Stelle der Reihenfolge verlegt. Somit kann zum Beispiel ein Laufzeitausgleich zwischen mehreren Energieerzeugern einer Gruppe realisiert werden. Ferner kann es innerhalb einer Gruppe auch stellenspezifische Schaltkriterien geben. Diese Stellenkriterien sind spezifisch für eine Position eines Energieerzeugers in der Reihenfolge innerhalb einer Gruppe. So kann beispielsweise der Energieerzeuger an der ersten Stelle einer Gruppe immer eingeschaltet bleiben. Auch wenn zwei Energieerzeuger ihre Stelle innerhalb einer Gruppe, zum Beispiel nach einer festgelegten Laufzeit, tauschen, bleibt das Stellenkriterium der vorab festgelegten Stelle erhalten.

Die Reihenfolge des Einschaltens und/oder Ausschaltens von Energieerzeugern innerhalb einer Kaskade kann in Abhängigkeit einer Reihenfolge der Gruppen und der Sequenzen innerhalb der Gruppen bestimmt werden.

Innerhalb jeder Kaskade kann unabhängig von anderen Kaskaden entschieden werden, ob und nach welchen Kriterien Energieerzeuger entlang der Reihenfolge ein- und/oder ausgeschaltet werden sollen. Dazu kann für jede Kaskade eine Vielzahl von Kriterien festgelegt sein, die zum Beispiel Schwellenwerte in Abhängigkeit von Energiebereitstellungsanforderungen definieren.

Die Kaskaden können von der Steuereinrichtung parallel und unabhängig voneinander gesteuert werden. Das heißt, dass beispielsweise ein Ein- oder Ausschalten eines ersten Energieerzeugers in einer ersten Kaskade unabhängig von einem Ein- oder Ausschalten eines zweiten Energieerzeugers in einer zweiten Kaskade erfolgen kann. Hierdurch kann die Regelgüte im Vergleich zu Verfahren, bei denen nur eine lineare Sequenz von Energieerzeugern festgelegt wird, deutlich verbessert werden. Außerdem kann durch das parallele Ausführen der Kaskaden im Gegensatz zu einer sequenziellen Reihenfolge verhindert werden, dass die Schaltreihenfolge an einem Energieerzeuger hängen bleibt, bei dem der Schaltvorgang durch ein Kriterium mit höherer Priorität verhindert wird.

Bei einem bevorzugten Verfahren wird mindestens einer der Energieerzeuger zum Erfüllen einer Mindestenergieanforderung verwendet. Die Mindestenergieanforderung wird auch als Grundlast bezeichnet. Ein Energieerzeuger, der eine Grundlast bereitstellt, kann beispielsweise nichtmodulierend betrieben werden und insbesondere eine sehr lange ununterbrochene Laufzeit erreichen. Dazu wird der Energieerzeuger vorzugsweise stets bei maximaler Leistung betrieben, beziehungsweise bei der Leistung, bei welcher der Energieerzeuger seine maximale Effizienz erreicht. Der Energieerzeuger zum Erfüllen der Mindestenergieanforderung kann zum Beispiel anhand von Wirtschaftlichkeitskriterien (zum Beispiel Preis des Energieträgers) ausgewählt werden. Typischerweise werden BHKWs und/oder Holzkessel zum Bereitstellen einer Grundlast verwendet. Zum Bereitstellen einer Mindestenergieanforderung von elektrischer Energie können ebenfalls BHKWs eingesetzt werden. Alternativ können Photovoltaikanlagen oder Windturbinen verwendet werden, bei denen die bereitgestellte Leistung jedoch wetterabhängig stark schwanken kann, so dass ein Pufferspeicher und/oder Leistung aus einem öffentlichen Stromnetz zum Ausgleichen der Schwankungen nötig sein kann. Für das Bereitstellen einer Grundlast kann eine gesonderte Kaskade vorgesehen sein.

Bei einem weiteren bevorzugten Verfahren wird mindestens ein Energieerzeuger zum Erfüllen einer Maximalenergieanforderung verwendet. Die Maximalenergieanforderung wird auch als Spitzenlast bezeichnet. Hierfür kann zum Beispiel ein besonders schnell regelbarer Energieerzeuger bestimmt werden. Bei einer Einteilung der Energieerzeuger in Kaskaden, kann der Energieerzeuger zum Erfüllen einer Maximalenergieanforderung in eine gesonderte autark und/oder parallel zu anderen Kaskaden regelbare Kaskade eingeordnet sein, so dass der Energieerzeuger unabhängig von Kriterien anderer Kaskaden jederzeit eingeschaltet werden kann, um eine Energiebereitstellungsanforderung zu erfüllen. Für das Bereitstellen einer Spitzenlast kann eine gesonderte Kaskade vorgesehen sein.

Die Steuereinrichtung kann vorzugsweise von jeder der Regeleinrichtungen Restriktionen bezüglich der Regelgrößen des jeweiligen Energieerzeugers erfassen, wobei die Restriktionen Minimal- und/oder Maximalwerte betreffen und/oder angeben, ob der betreffende Energieerzeuger eingeschaltet und/oder ausgeschaltet sein muss.

Diese Restriktionen können erzeugerspezifische Restriktionen sein. Als Restriktion können auch ein Minimalwert und/oder ein Maximalwert vorgegeben werden, die jeweils gleich groß sein können. Hierdurch kann für den Energieerzeuger ein Arbeitspunkt festgelegt werden, an dem der Energieerzeuger betrieben werden soll. Ein solcher Arbeitspunkt kann beispielsweise einen besonders effizienten Betrieb des Energieerzeugers sicherstellen. Durch das Erfassen der Restriktionen kann erreicht werden, dass die Steuereinrichtung in koordinierter Weise beim Bestimmen der Sollwerte zum Erfüllen der Energiebereitstellungsanforderungen auf Vorgaben durch die Energieerzeuger Rücksicht nimmt. Insbesondere kann vermieden werden, dass die Steuereinrichtung einen Sollwert für einen Energieerzeuger bestimmt, der aufgrund eigener Restriktionen diesen Sollwert nicht erfüllen kann.

Außerdem kann die Steuereinrichtung dafür ausgelegt sein, von jeder der Regeleinrichtungen spezifische Eigenschaften des jeweiligen Energieerzeugers zu erfassen, die angeben wie ein Energieerzeuger auf eine Regelgrößenänderung reagiert. Solche spezifische Eigenschaften können eine Kennlinie eines Energieerzeugers darstellen, die beispielsweise angibt, welche Leistung der Energieerzeuger ausgibt, wenn eine bestimmte Regelgröße eingestellt wird.

Die spezifischen Eigenschaften können insbesondere dynamische Eigenschaften des Energieerzeugers betreffen. Zum Beispiel können sie beschreiben, wie viel Zeit ein Energieerzeuger benötigt, um auf Volllast hochgefahren zu werden beziehungsweise wie lange es dauert, um den Energieerzeuger auszuschalten. Hierdurch kann erreicht werden, dass unabhängig davon welcher Energieerzeuger in der Gruppe als erstes angesteuert wird, zu jeder Zeit ein Energieerzeuger mit einer ähnlichen dynamischen Eigenschaft verfügbar ist.

Eine spezifische Eigenschaft eines Energieerzeugers kann außerdem von einer hydraulischen Anbindung des Energieerzeugers in der Energieversorgungsanlage abhängen. So kann erreicht werden, dass Energieerzeuger gemäß ihrer physischen Anordnung in der Energieversorgungsanlage gruppiert werden. Hierdurch kann die beispielsweise das Erfüllen einer Anforderung nach einer bestimmten Vorlauftemperatur vereinfacht werden.

Eine spezifische Eigenschaft eines Energieerzeugers gemäß der Erfindung kann ferner die von ihm bereitgestellte(n) Energieform(en) sein. Außerdem kann die spezifische Eigenschaft der von dem Energieerzeuger verwendete Energieträger sein und/oder von der Art des verwendeten Energieträgers abhängen.

Die Steuereinrichtung kann ferner dazu ausgelegt sein, eine Reihenfolge des Einschaltens und/oder Ausschaltens der Energieerzeuger, insbesondere innerhalb einer Kaskade oder einer Gruppe, in Abhängigkeit der Restriktionen und/oder der spezifischen Eigenschaften der Energieerzeuger zu bestimmen. Darüber hinaus kann die Steuereinrichtung dazu ausgelegt sein, Sollwerte für jeden Energieerzeuger zum Erfüllen der Energiebereitstellungsanforderung in Abhängigkeit der Reihenfolge des Einschaltens und/oder Ausschaltens zu bestimmen.

In einem bevorzugten Verfahren kann die Steuereinrichtung erfassen, ob eine Energiebereitstellungsanforderung zum Bereitstellen von Wärme und elektrischer Energie vorliegt. Wenn dies der Fall ist, ermittelt die Steuereinrichtung ob einer der Energieerzeuger Wärme und elektrische Energie bereitstellen kann. Wenn dies der Fall ist bestimmt die Steuereinrichtung Sollwerte für den Energieerzeuger zum Bereitstellen von Wärme und elektrischer Energie in Abhängigkeit der Energiebereitstellungsanforderung. Alternativ kann die Steuereinrichtung mindestens zwei Energieerzeuger auswählen, so dass mindestens einer der Energieerzeuger Wärme und mindestens ein anderer der Energieerzeuger elektrische Energie bereitstellt.

Ein bevorzugtes Verfahren bestimmt, ob eine Gruppe mehr als einen Energieerzeuger aufweist und wenn dies der Fall ist, werden Regelgrößen der Energieerzeuger der Gruppe, die einen aktuellen Betriebszustand und/oder einen historischen Verlauf von Betriebszuständen beschreiben, erfasst. Ferner wird eine Reihenfolge der Energieerzeuger innerhalb der Gruppe gemäß der erfassten Regelgrößen und/oder einem Verhältnis der Regelgrößen festgelegt. Das Regeln der Energieerzeuger, durch die Steuereinrichtung, erfolgt dann in Abhängigkeit der festgelegten Reihenfolge der Energieerzeuger innerhalb der Gruppe.

Durch diese Verfahrensschritte kann ein Laufzeitausgleich insbesondere zwischen gleichartigen Energieerzeugern, die derselben Gruppe zugeordnet sind, durchgeführt werden. Die Laufzeit kann als aktueller beziehungsweise historischer Verlauf eines Betriebszustands angesehen werden. Hierunter kann zum Beispiel auch eine Anzahl vergangener Wartungsintervalle fallen, eine vergangene Zeit seit einem letzten Wartungsintervall beziehungsweise die verbleibende Zeit bis zum nächsten Wartungsintervall.

Ferner kann das Verfahren beinhalten, dass eine Reihenfolge der Gruppen von Energieerzeugern in Abhängigkeit mindestens einer der folgenden Eigenschaften der Energieerzeuger festgelegt wird: Energiegehalt beziehungsweise Heizwert des jeweiligen Trägermediums, Preis des jeweiligen Trägermediums, Zeitdauer bis Erreichen eines optimalen Betriebszustands des Energieerzeugers, Verfügbarkeit des jeweiligen Trägermediums, Dauer bis Erreichen eines nächsten Wartungsintervalls. Die Energieerzeuger werden dann durch die Steuereinrichtung in Abhängigkeit der festgelegten Reihenfolge der Gruppen geregelt.

Die Gruppen von Energieerzeugern können außerdem in Abhängigkeit dynamischer Eigenschaften der Energieerzeuger in Kaskaden eingeteilt werden. Das Regeln der Energieerzeuger durch die Steuereinrichtung erfolgt dann auch in Abhängigkeit der festgelegten Einteilung der Gruppen in Kaskaden. Die Kaskaden können autark und parallel zueinander ausgeführt werden. Hiermit kann erreicht werden, dass in einer Kaskade mehrere Energieerzeuger gemäß einer festgelegten (aber variablen) Reihenfolge ein- und ausgeschaltet werden, wobei andere Energieerzeuger, die einer anderen Kaskade angehören, unabhängig von der Reihenfolge der ersten Kaskade bei Bedarf eingeschaltet werden können. Hiermit kann unter anderem die Regelgüte der Energieversorgungsanlage deutlich verbessert werden.

Alternativ zu den bisher erwähnten Verfahren zum Bestimmen oder Festlegen einer Reihenfolge des Einschaltens und/oder Ausschaltens kann eine solche Reihenfolge auch manuell von einem Benutzer festgelegt werden. Dies kann auch für die Reihenfolge von Gruppen in einer Kaskade oder von Energieerzeugern innerhalb einer Gruppe zutreffen.

Eine dynamische Eigenschaft eines Energieerzeugers kann im Allgemeinen als zeitliche Ableitung einer Zustandsänderung des Energieerzeugers angesehen werden, beispielsweise die Zeit, die der Energieerzeuger benötigt, um von einem ausgeschalteten Zustand in einem optimalen Betriebszustand hochgefahren zu werden oder umgekehrt. Ferner kann die dynamische Eigenschaft eine Zeit betreffen, die ein Energieerzeuger benötigt, um einen festgelegten Sollwert zu erreichen beziehungsweise eine bestimmte Sollwertänderung vorzunehmen. Hierzu kann die Steuereinrichtung ein Speichermedium umfassen, auf dem Kennlinien von jedem der Energieerzeuger hinterlegt sind. Alternativ kann die Steuereinrichtung die dynamischen Eigenschaften der Energieerzeuger durch Messung ermitteln.

Die spezifische Eigenschaft der Energieerzeuger kann von der Art des von dem Energieerzeuger verwendeten Energieträgers abhängen. In manchen Fällen können auch dynamische Eigenschaften eines Energieerzeugers vom verwendeten Brennstoff abhängen. Wie oben erläutert benötigt etwa ein Holzkessel wesentlich mehr Zeit zum Hochfahren als ein Gaskessel. Weitere spezifische Eigenschaften können mit der Verfügbarkeit oder den Kosten des Energieträgers zusammenhängen. Darüber hinaus kann die physische Anordnung eines Energieerzeugers in einer multivalenten Energieversorgungsanlage als spezifische Eigenschaft verwendet werden.

So kann zum Beispiel ein Energieerzeuger, der die Sonne als Energiequelle nutzt, nachts keine Energie bereitstellen. Eine Windturbine kann bei Windstille keine Energie bereitstellen. Bei einer Wärmepumpe kann ein Mindestintervall vorgegeben sein, in dem die Wärmepumpe nicht ausgeschaltet werden darf, beziehungsweise ein Zeitraum, in dem die Wärmepumpe nach einem Ausschalten nicht wieder eingeschaltet werden darf. All diese und weitere spezifische Eigenschaften können Auswirkungen auf den Betrieb einer multivalenten Energieversorgungsanlage haben.

Vorzugsweise kann das Verfahren einen Schritt umfassen, bei dem bestimmt wird, ob eine Energiebereitstellungsanforderung für mehr als eine der Energieformen Wärme, Kälte oder elektrischer Energie besteht. Dann kann eine Einteilung der Kaskaden in Abhängigkeit der durch die Energieerzeuger bereitgestellten Energieform festgelegt werden. Das Regeln der Energieerzeuger erfolgt dann durch die Steuereinrichtung in Abhängigkeit der festgelegten Einteilung der Kaskaden in Energieformen.

Für jede Energieform kann eine eigene Einteilung der Energieerzeuger in Gruppen und/oder Kaskaden festgelegt werden. Die Einteilung in Gruppen und/oder Kaskaden kann sich zwischen den Energieformen unterscheiden. Innerhalb einer Energieform wird ein Energieerzeuger genau einer Gruppe zugeordnet und eine Gruppe wird innerhalb einer Energieform genau einer Kaskade zugeordnet. Ein Energieerzeuger wird somit pro Energieform auch genau einer Kaskade zugeordnet.

Eine bevorzugte Steuereinrichtung ist dafür ausgelegt, die Gruppen von Energieerzeugern in Kaskaden einzuteilen. Das Einteilen kann In Abhängigkeit mindestens einer für die Gruppe von Energieerzeugern spezifischen Eigenschaft erfolgen, wobei jede Gruppe genau einer Kaskade zugeordnet wird. Falls eine Kaskade mehr als eine Gruppe umfasst kann eine sequenzielle Reihenfolge der Gruppen in der Kaskade festgelegt werden. Für jeden Energieerzeuger bestimmt die Steuereinrichtung Sollwerte zum Erfüllen der mindestens einen Energiebereitstellungsanforderung in Abhängigkeit der festgelegten Einteilung der Gruppen in Kaskaden. Die Kaskaden sind hierbei unabhängig voneinander durch die Steuereinrichtung steuerbar.

### Kurzbeschreibung der Figuren

Weitere vorteilhafte Ausgestaltungen werden nachfolgend anhand eines in den Zeichnungen dargestellten Ausführungsbeispiels, auf welches die Erfindung jedoch nicht beschränkt ist, näher beschrieben.

Es zeigen schematisch:
- **Figur 1**: eine Darstellung einer Steuerungslogik einer multivalenten Energieversorgungsanlage gemäß einem ersten Ausführungsbeispiel.
- **Figur 2**: eine gemäß dem Stand der Technik bekannte parallele Einteilung von Energieerzeugern.
- **Figur 3**: eine gemäß dem Stand der Technik bekannte sequenzielle Reihenfolge zum Einschalten beziehungsweise Ausschalten von Energieerzeugern.
- **Figur 4**: eine beispielhafte erfindungsgemäße Einteilung von acht Energieerzeugern in Gruppen und Kaskaden gemäß einem zweiten Ausführungsbeispiel.
- **Figur 5**: ein Hydraulikschema einer multivalenten Energieversorgungsanlage gemäß einem dritten Ausführungsbeispiel mit zwei BHKWs und zwei Gaskesseln.
- **Figur 6**: eine Einteilung der Energieerzeuger des dritten Ausführungsbeispiels in Energieformen, Kaskaden und Gruppen.
- **Figur 7**: ein Hydraulikschema einer multivalenten Energieversorgungsanlage gemäß einem vierten Ausführungsbeispiel mit zwei Holzkesseln und einem Gaskessel.
- **Figur 8**: eine Einteilung der Energieerzeuger des vierten Ausführungsbeispiels in Kaskaden und Gruppen.
- **Figur 9**: ein Hydraulikschema einer multivalenten Energieversorgungsanlage gemäß einem fünften Ausführungsbeispiel mit einer Wärmepumpe und einem Gaskessel.
- **Figur 10**: eine Einteilung der Energieerzeuger des fünften Ausführungsbeispiels in Kaskaden und Gruppen.
- **Figur 11**: ein Hydraulikschema einer multivalenten Energieversorgungsanlage gemäß einem sechsten Ausführungsbeispiel mit zwei Ölkesseln und zwei Gaskesseln.
- **Figur 12**: eine Einteilung der Energieerzeuger des sechsten Ausführungsbeispiels in Kaskaden und Gruppen.
- **Figur 13**: ein Hydraulikschema einer multivalenten Energieversorgungsanlage gemäß einem siebten Ausführungsbeispiel mit zwei Gaskesseln, zwei BHKWs und zwei Holzkesseln.
- **Figur 14**: eine Einteilung der Energieerzeuger des siebten Ausführungsbeispiels in Kaskaden und Gruppen.

### Ausführliche Beschreibung von Ausführungsbeispielen

Bei der nachfolgenden Beschreibung einer bevorzugten Ausführungsform der vorliegenden Erfindung bezeichnen gleiche Bezugszeichen gleiche oder vergleichbare Komponenten.

### Erstes Ausführungsbeispiel

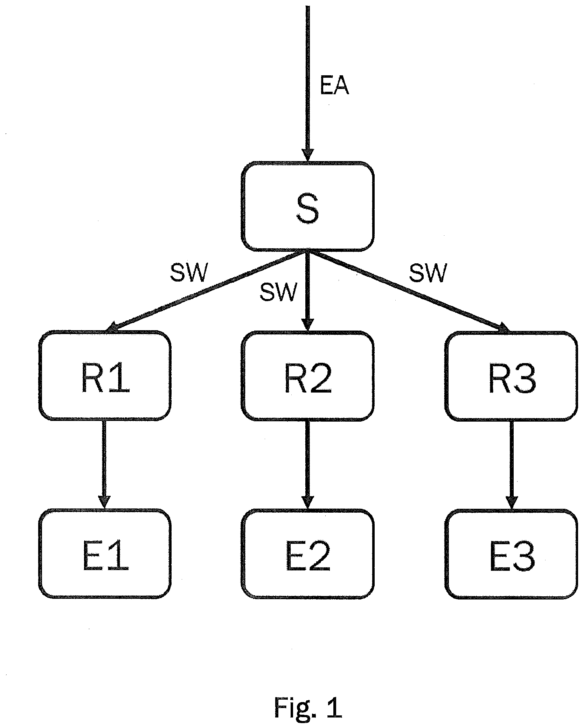

Figur 1 zeigt einen schematischen Aufbau einer Steuereinrichtung S zum Steuern einer multivalenten Energieversorgungsanlage gemäß einem ersten Ausführungsbeispiel. Die SteuereinrichtungS erfasst eine Energiebereitstellungsanforderung EA, die zum Beispiel von einer Vielzahl von Verbrauchern (nicht dargestellt) erzeugt werden kann. Die Steuereinrichtung S ermittelt Sollwerte für eine Vielzahl von Energieerzeugern E1-E3 der multivalenten Energieversorgungsanlage und gibt diese an Regeleinrichtungen R1-R3 der Energieerzeugern E1-E3 aus.

### Kaskaden

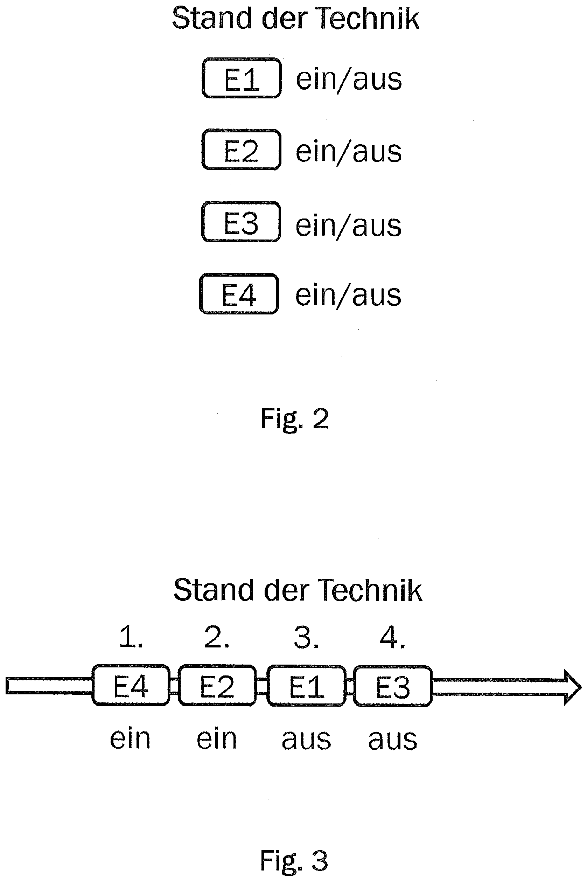

Im Folgenden wird die Einteilung der Energieerzeuger in Energieformen, Kaskaden und Gruppen beschrieben. Die Ausgangssituation gemäß dem Stand der Technik veranschaulichen die in den Figuren 2 und 3 gezeigten Beispiele. Hier sind jeweils vier Energieerzeuger E1-E4 dargestellt.

Figur 2 zeigt ein Beispiel einer Einteilung von Energieerzeugern gemäß dem Stand der Technik. Jeder Energieerzeuger E1-E4 kann hier nach eigenen Kriterien ein- und ausgeschaltet werden und auch unabhängig voneinander gesteuert werden. Nachteilig an einer solchen Einteilung ist, dass eine Reihenfolge des Schaltens weder festgelegt noch vorausgesagt werden kann. Auch ein zeitgleiches Ein- beziehungsweise Ausschalten einiger oder aller Energieerzeuger ist hier möglich. Ein Laufzeitausgleich zwischen Energieerzeugern kann bei einersolchen parallelen Einteilung nicht realisiert werden.

Figur 3 zeigt eine sequenzielle Anordnung der vier Energieerzeuger E1-E4. Die Reihenfolge der Energieerzeuger E1-E4 kann entweder statisch oder dynamisch sein. Das Einschalten erfolgt hier in der Reihenfolge von links nach rechts und das Ausschalten in entsprechend umgekehrter Reihenfolge von rechts nach links. Die Figur 3 zeigt einen Zustand, in dem die Energieerzeuger E4 und E2 an erster und zweiter Stelle bereits eingeschaltet sind. Als nächstes prüft die Steuereinrichtung, ob der Energieerzeuger E1 an dritter Stelle eingeschaltet werden soll, zum Beispiel in Abhängigkeit einer vorgegebenen Energiebereitstellungsanforderung. Ist das Ergebnis der Prüfung, dass E1 ausgeschaltet bleibt, so endet die Prüfung an dieser Stelle und es wird nicht geprüft, ob der Energieerzeuger E3 an vierter Stelle eingeschaltet werden soll. Ein Einschalten des Energieerzeugers E3 wird somit durch den Energieerzeuger E1 an dritter Stelle blockiert.

Bei einer multivalenten Energieversorgungsanlage mit beispielsweise zwei Holzkesseln und einem Gaskessel (siehe viertes Ausführungsbeispiel) mit den beiden Holzkesseln an erster und zweiter Stelle und dem Gaskessel an dritter Stelle wäre eine solche Anordnung von Nachteil, da bei ausgeschaltetem Holzkessel H2 an zweiter Stelle ein Einschalten des Gaskessels G1 an dritter Stelle bei Auftreten einer kurzfristigen Spitzenlast verhindert werden würde. Allgemeiner ausgedrückt, In einer multivalenten Energieversorgungsanlage soll ein träger Energieerzeuger, der viel Zeit zum Einschalten benötigt, in der Schaltreihenfolge gegebenenfalls übersprungen werden können, um eine bessere Regelgüte zu erreichen.

Die oben beschriebenen Probleme werden durch das erfindungsgemäße Verfahren gelöst. Zunächst werden in einer multivalenten Energieversorgungsanlage alle Energieerzeuger genau einer Gruppe zugeordnet. Die Gruppierung erfolgt gemäß spezifischer Eigenschaften der Energieerzeuger, so dass ähnliche oder gleichartige Energieerzeuger in eine Gruppe eingeteilt werden. Dies kann beispielsweise anhand des verwendeten Energieträgers erfolgen.

### Zweites Ausführungsbeispiel

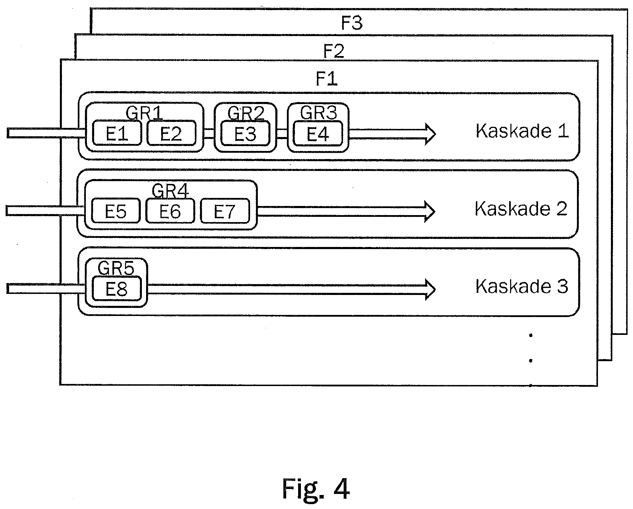

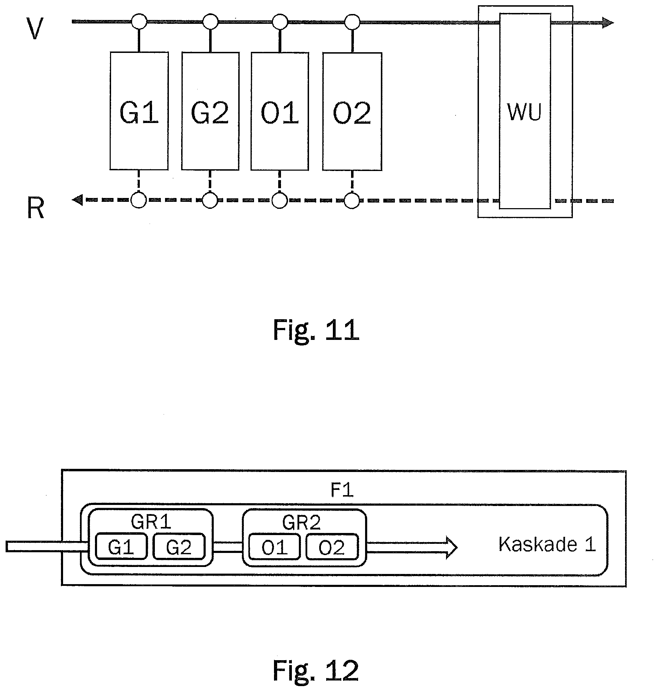

Eine beispielhafte Zuordnung von acht Energieerzeugern E1-E8 ist in Figur 4 dargestellt. Zunächst wird jeder der Energieerzeuger E1-E8 anhand spezifischer Eigenschaften in Gruppen eingeordnet, so dass jeder Energieerzeuger in genau einer Gruppe ist. In dem Beispiel der Figur 12 ergeben sich dadurch fünf Gruppen GR1-GR5. Die Reihenfolge der Energieerzeuger innerhalb der Gruppen ist variabel, so dass beispielsweise ein Laufzeitausgleich zwischen gleichartigen Energieerzeugern durchgeführt werden kann.

Anschließend werden die Gruppen Kaskaden zugeordnet. Kaskaden können voneinander unabhängig Energieerzeuger ein- beziehungsweise ausschalten. Außerdem können Kaskaden parallel zueinander ausgeführt werden. In dem Beispiel werden die Gruppen GR1-GR5 in drei Kaskaden eingeteilt, die alle einer ersten Energieform F1 angehören. Zusätzlich können einzelne Energieerzeuger auch andere Energieformen bereitstellen, so dass sie bei der Einteilung in Gruppen und Kaskaden auch anderen Energieformen F2-F3 zugeordnet werden können.

Innerhalb einer Kaskade verläuft die Einschaltreihenfolge von links nach rechts, wie durch die Pfeile angedeutet. Die Ausschaltreihenfolge verläuft in entgegengesetzter Richtung von rechts nach links. Die Reihenfolge der Gruppen innerhalb einer Kaskade kann statisch sein und in Abhängigkeit von weiteren Kriterien erfolgen. Diese Kriterien können beispielsweise erzeugerspezifisch oder anlagenspezifisch sein. Beispielsweise kann die Reihenfolge von dynamischen Eigenschaften der Energieerzeuger abhängen. Alternativ kann die Reihenfolge auch von hydraulischen Zusammenhängen der Energieerzeuger innerhalb der Energieversorgungsanlage abhängen.

### Drittes Ausführungsbeispiel

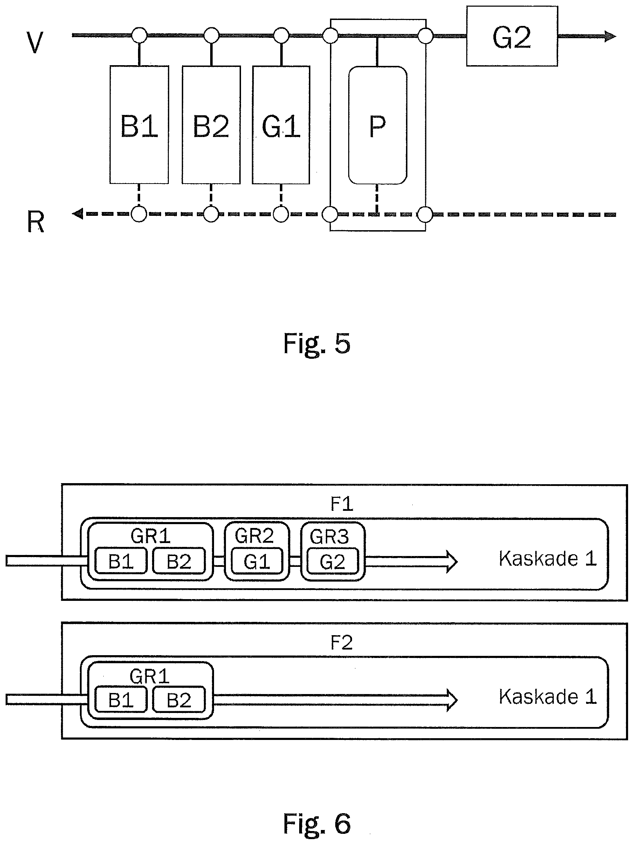

Figur 5 zeigt eine schematische Darstellung eines dritten Ausführungsbeispiels einer multivalenten Energieversorgungsanlage zum Bereitstellen von Wärme und elektrischer Energie. In Figur 5 ist ein Hydraulikschema (eine schematische Darstellung der Infrastruktur) der Energieversorgungsanlage dargestellt, bei der Wärme an ein fluides Trägermedium, zum Beispiel Wasser, abgegeben wird. Das Trägermedium transportiert die Wärme über einen Vorlauf V zu einem Verbraucherkreislauf (nicht dargestellt). Der Vorlauf ist als durchgezogener Pfeil dargestellt, der die Fließrichtung des Trägermediums illustriert. Im Verbraucherkreislauf kann eine Vielzahl von Verbrauchern, zum Beispiel eine Vielzahl von Heizkörpern, angeordnet sein.

Über einen Rücklauf R fließt das Trägermedium vom Verbraucherkreislauf zurück zur Energieversorgungsanlage. Der Vorlauf ist als gestrichelter Pfeil dargestellt, der die Fließrichtung des Trägermediums illustriert. Das Trägermedium kann beispielsweise mittels Umwälzpumpen zum Fließen gebracht werden, die im Erzeugerkreislauf, beispielsweise in den Energieerzeugern B1, B2, G1, G2, und/oder im Verbraucherkreislauf angeordnet sein können. Zudem können Ventile und/oder Drosselklappen und/oder Sensoren zum Messen des Stroms und/oder der Temperatur in den Energieerzeugern B1, B2, G1, G2 und/oder im Vorlauf V und/oder im Rücklauf R angeordnet sein, um einen Fluss durch die Energieerzeuger B1, B2, G1, G2 zu steuern, beziehungsweise zu regeln.

Die Energieversorgungsanlage weist zwei Blockheizkraftwerke (BHKW) B1, B2 und zwei Gaskessel G1, G2 auf, wobei die beiden BHKWs B1, B2 jeweils zwischen dem Vorlauf V und dem Rücklauf R parallel zueinander angeordnet sind. Über den Rücklauf R fließt das von Verbraucherseite kommende Trägermedium zu den Energieerzeugern, die dem Trägermedium Wärme zuführen. Über den Vorlauf V fließt das Trägermedium zum Verbraucherkreislauf (nicht dargestellt).

Ein erster Gaskessel G1 ist ebenfalls parallel zu den BHKWs B1, B2 stromabwärts am Vorlauf V angeordnet. Weiter stromabwärts am Vorlauf V befindet sich zudem ein Pufferspeicher P parallel zum ersten Gaskessel G1 und den BHKWs B1, B2. Stromabwärts vom Pufferspeicher P ist ein zweiter Gaskessel G2 in Reihe im Vorlauf V angeordnet, so dass der zweite Gaskessel G2 die Vorlauftemperatur direkt anheben kann. Aufgrund der Anordnung des zweiten Gaskessels G2 im Vorlauf nach dem Pufferspeicher kann er die Temperatur des im Pufferspeicher gespeicherten Wassers nicht beeinflussen.

Die BHKWs B1, B2 und die Gaskessel G1, G2 weisen jeweils eine Regeleinrichtung R1-R4 zum Regeln von Regelgrößen der Energieerzeuger auf. Eine Steuereinrichtung S ist mit den Regeleinrichtungen R1-R4 verbunden und kann periodisch die eingestellten Regelgrößen abfragen und Sollwerte SW an die Regeleinrichtungen R1-R4 ausgeben. Die Steuerungslogik ist somit ähnlich wie In Figur 1 dargestellt, aber mit vier Energieerzeugern B1, B2, G1, G2, ausgeführt.

Die Steuereinrichtung S der Energieversorgungsanlage des Ausführungsbeispiels kann gemäß Vorgaben eines festgelegten Betriebsmodus gesteuert werden. Der erste Gaskessel G1 soll dabei erst dann eingesetzt werden, wenn beide BHKWs B1, B2 bereits in Betrieb sind und die von ihnen im Vorlauf V bereitgestellte Wärme nicht ausreicht, um eine Energiebereitstellungsanforderung EA, zum Beispiel in Form einer geforderten Temperatur im Pufferspeicher P oder einer Anlagenvorlauftemperatur an der Übergabe (rechts in der Figur) zum Verbraucherkreislauf, zu erfüllen. Der zweite Gaskessel G2 soll hierbei erst dann eingesetzt werden, wenn beide BHKWs B1, B2 und der erste Gaskessel G1 bereits in Betrieb sind und die bereitgestellte Wärme nicht ausreicht um die Energiebereitstellungsanforderung zu erfüllen.

Anhand von Figur 6 wird nun erklärt, wie eine Reihenfolge des Einschaltens beziehungsweise Ausschaltens in der multivalenten Energieversorgungsanlage bestimmt wird. Da die multivalente Energieversorgungsanlage sowohl Wärme als auch elektrische Energie bereitstellen kann werden zwei Energieformen F1 (für Wärme) und F2 (für elektrische Energie) bereitgestellt.

Zwischen den BHKWs B1, B2 soll ein Laufzeitausgleich stattfinden. Dazu werden die beiden BHKWs B1, B2 in einer Gruppe GR1 zugeordnet. Innerhalb der Gruppe können die BHKWs B1, B2 ihre Stellen tauschen. Ein Kriterium dafür an welcher Stelle ein BHKW in der Gruppe stehen soll kann der Laufzeitunterschied zwischen den BHKWs B1, B2 sein. Der Laufzeitunterschied ist somit als ein stellenspezifisches Kriterium. Ein Kriterium, das erzeugerspezifisch beispielsweise für das BHKW B1 ist, wandert beim Tauschen der Stellen mit und bleibt somit beim Energieerzeuger. Um ein ständiges Tauschen der Stellen der beiden BHKWs B1, B2 innerhalb der Gruppe GR1 zu verhindern, kann zudem ein Mindestlaufzeitunterschied festgelegt werden, ab dem ein Laufzeitausgleich stattfinden darf. Die Steuereinrichtung erfasst die Laufzeiten der BHKWs und legt in Abhängigkeit der erfassten Laufzeiten die Reihenfolge der BHKWs fest.

Die Reihenfolge, in der der erste Gaskessel G1 und der zweite Gaskessel G2 eingeschaltet werden soll fest sein. Es soll kein Laufzeitausgleich zwischen den Gaskesseln G1, G2 stattfinden. Der Grund hierfür kann beispielsweise sein, dass der erste Gaskessel G1 einen besseren Nutzungsgrad (zum Beispiel ein Brennwertkessel) als der zweite Gaskessel G2 (zum Beispiel ein Niedertemperaturkessel) hat. Um dies zu erreichen, werden die beiden Gaskessel G1, G2 zwei separaten Gruppen GR2, GR3 zugeordnet. Der Nutzungsgrad der Gaskessel ist ein Beispiel für eine spezifische Eigenschaft der Energieerzeuger.

Die drei Gruppen GR1-GR3 der ersten Energieform F1 können einer gemeinsamen Kaskade 1 zugeteilt werden. Die Reihenfolge der Gruppen GR1, GR2, GR3 kann fest oder variabel sein. Damit die BHKWs B1, B2 so viele Betriebsstunden wie möglich erreichen können, wird die Gruppe GR1 an erster Stelle innerhalb der Kaskade 1 angeordnet. Da der Gaskessel G1 dem Gaskessel G2 gegenüber bevorzugt betrieben werden soll wird die Gruppe GR2 mit dem Gaskessel G1 an zweiter Stelle vor der Gruppe GR3 mit dem Gaskessel G2 in der Kaskade 1 angeordnet.

Die Steuereinrichtung empfängt auch Energiebereitstellungsanforderungen einer angeforderten elektrischen Leistung (zum Beispiel als Anforderung nach einem elektrischen Strom und/oder nach einer elektrischen Spannung). Die BHKWs B1, B2 können daher neben einer Energiebereitstellungsanforderung für Wärme auch zum Erfüllen der Anforderungen nach elektrischer Energie geschaltet beziehungsweise geregelt werden. Daher werden die BHKWs B1, B2 einer zweiten Energieform F2 für elektrische Energie zugeordnet.

Energiebereitstellungsanforderungen nach elektrischer Energie und/oder Schaltanforderung für Energieerzeuger, die elektrische Energie bereitstellen werden von der Steuereinrichtung S berücksichtigt. Die BHKWs würden in diesem Beispiel wie folgt zum Bereitstellen von Wärme betrieben werden:
Das erste BHKW B1 an erster Stelle innerhalb der Gruppe GR1 (je nach Laufzeitausgleich kann dies auch das zweite BHKW B2 sein) wird bei Unterschreiten einer geforderten Anlagenvorlauftemperatur eingeschaltet. Die geforderte Anlagenvorlauftemperatur wird hierbei stromabwärts vom zweiten Gaskessel G2 im Vorlauf V gemessen. Bei Überschreiten eines vorbestimmten Schwellenwertes der Temperatur im Pufferspeicher P, die an einer unten im Pufferspeicher P liegenden Schicht gemessen wird, wird das erste BHKW B1 ausgeschaltet.

Die Steuerung des zweiten BHKW B2 an zweiter Stelle in Gruppe GR1 erfolgt in ähnlicher Weise, wie die des ersten BHKW B1. Wenn trotz eingeschaltetem BHKW B1 ein Unterschreiten der geforderten Anlagenvorlauftemperatur erfasst wird, schaltet die Steuereinrichtung S das zweite BHKW B2 hinzu. Bei Überschreiten eines vorbestimmten Schwellenwertes der Temperatur im Pufferspeicher P, die an einer in der Mitte des Pufferspeicher P liegenden Schicht gemessen wird, schaltet die Steuereinrichtung S das zweite BHKW B2 wieder ab.

Der Gaskessel G1 wird bei bereits eingeschalteten BHKWs B1 und B2 bei Unterschreiten der geforderten Anlagenvorlauftemperatur eingeschaltet. Das Ausschalten des Gaskessels G1 erfolgt wenn ein Schwellenwert der Temperatur im Pufferspeicher P, die in einer oben liegenden Schicht gemessen wird, überschritten wird.

Sind die ersten drei Energieerzeuger in Kaskade 1 der Energieform Wärme F1 bereits in Betrieb aber es wird ein Unterschreiten der geforderten Anlagenvorlauftemperatur gemessen, so wird der zweite Gaskessel G2 eingeschaltet. Sobald die geforderte Anlagenvorlauftemperatur überschritten wird schaltet die Steuereinrichtung S den Gaskessel G2 wieder ab.

Insbesondere werden die Anforderungen aus der Energieform Wärme und aus der Energieform elektrische Energie von der Steuerungseinrichtung koordiniert erfasst und weiterverarbeitet. Dies entspricht einer Kompromissfindung der Anforderungen aus der Energieform Wärme und der Energieform elektrische Energie. Würde die Energieform Wärme beispielsweise ein Ausschalten eines BHKWs fordern, würde die Steuerungseinrichtung S zunächst prüfen, ob die Energieform elektrische Energie weiterhin den Betrieb des BHKWs fordert, bevor die Freigabe entzogen wird. Hierzu kann die Steuereinrichtung S dafür ausgelegt sein, den Energiebedarf der betreffenden Energieform abschätzen und die Entscheidung über das Entziehen der Freigabe davon abhängig machen, ob ein Weiterbetreiben des BHKWs erforderlich ist. Durch dieses Verfahren kann die Anzahl der Ein- und Ausschaltvorgänge minimiert werden, wodurch ein Verschleiß der Energieerzeuger reduziert werden kann.

Gemäß dem Ausführungsbeispiel kann eine Freigabe an einen Energieerzeuger erteilt werden, wenn mindestens eine Energieform die Freigabe des Energieerzeugers fordert. Die Freigabe kann dann entzogen werden, wenn keine Energieform mehr den Betrieb des Energieerzeugers fordert.

### Viertes Ausführungsbeispiel

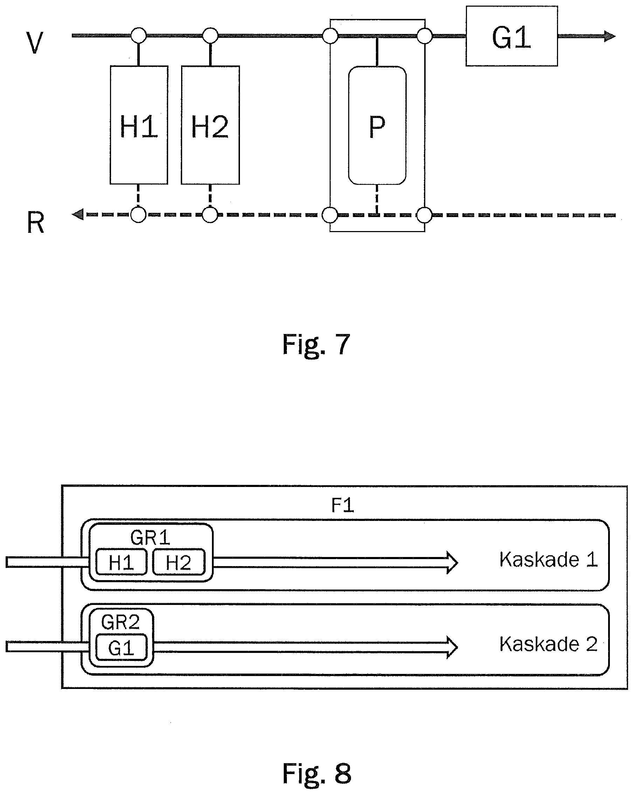

Figur 7 zeigt ein Hydraulikschema einer Energieversorgungsanlage gemäß einem vierten Ausführungsbeispiel. Ähnlich wie im dritten Ausführungsbeispiel weist die Energieversorgungsanlage einen Pufferspeicher P zwischen Vorlauf V und Rücklauf R und einen Gaskessel G1 im Vorlauf V stromabwärts vom Pufferspeicher P auf. Ein erster Holzkessel H1 und ein zweiter Holzkessel H2 sind jeweils parallel zueinander und parallel zum Pufferspeicher P stromaufwärts am Vorlauf V1 angeordnet.

Eine Steuereinrichtung S der Energieversorgungsanlage gemäß dem zweiten Ausführungsbeispiel ist so eingerichtet, dass die Holzkessel H1, H2 bevorzugt eingesetzt werden, wobei der Gaskessel G1 die Spitzenlast abdecken soll. Hierdurch wird der günstigere Brennstoff Holz für die Grundlast (Erfüllen einer Mindestenergieanforderung) verwendet, während die Trägheit der Holzkessel H1, H2 durch die Verwendung eines schnell einschaltbaren und auch schnell wieder ausschaltbaren Gaskessel G1 ausgeglichen wird. Der Gaskessel G1 kann somit eine Spitzenlast bereitstellen (Erfüllen einer Maximalenergieanforderung).

Somit kann durch die auf die spezifischen Eigenschaften der Energieerzeuger angepasste Steuerung der multivalenten Energieversorgungsanlage eine hohe Regelgüte erreicht werden. Eine Energiebereitstellungsanforderung in Form einer geforderten Anlagenvorlauftemperatur am Übergang zu einem Verbraucherkreislauf (nicht dargestellt) kann somit schnell erreicht und anschließend gehalten werden. Dies kann insbesondere dann von Vorteil sein, wenn auf der Verbraucherseite sensible Prozesse angeschlossen sind (zum Beispiel Produktionsmaschinen).

Als weitere Anforderung an die Steuerung der multivalenten Energieversorgungsanlage kann vorgegeben werden, dass zwischen den Holzkesseln ein Laufzeitausgleich stattfinden soll. Außerdem sollen die Holzkessel H1, H2 im oberen Leistungsbereich betrieben werden, in dem eine besonders schadstoffarme, also saubere Verbrennung stattfinden kann und ein möglichst hoher Wirkungsgrad erreicht wird. Hiermit kann zudem eine möglichst lange Betriebsdauer zwischen Wartungsvorgängen erreicht werden.

Gemäß dem Stand der Technik wird üblicherweise eine feste Ein- und Ausschaltfolge vorgegeben, wobei kein Laufzeitausgleich erfolgen kann. Der erste Holzkessel H1 würde dann wesentlich mehr Betriebsstunden erhalten, als der zweite Holzkessel H2. Bei einer Laständerung (zum Beispiel durch Einschalten beziehungsweise Hochfahren der Energieversorgungsanlage nach einem Stillstand, etwa nach einer Wartung oder an einem Wochenende) wird zunächst der erste Holzkessel H1 angeschaltet. Dieser benötigt jedoch eine relativ lange Zeit, bis eine ausreichend große Wärmemenge geliefert werden kann, um eine Energiebereitstellungsanforderung zu erfüllen. Daher würde (gegebenenfalls nach einer vorbestimmten Wartezeit) bei einem solchen Verfahren bei Nichterfüllen der Energiebereitstellungsanforderung zunächst der zweite Holzkessel H2 eingeschaltet werden. Erst nach einer weiteren Wartezeit könnte der Gaskessel G1 ebenfalls eingeschaltet werden. Der Gaskessel G1 könnte die geforderte Wärmemenge in relativ kurzer Zeit liefern. Bei einem solchen Vorgehen gemäß dem Stand der Technik würde eine relativ lange Zeit vergehen, bis die geforderte Wärmemenge bereitgestellt werden kann. In anderen Worten, die Regelgüte der Energieversorgungsanlage wäre bei einem solchen Vorgehen stark eingeschränkt. Als nachteilige Folge könnten beispielsweise Produktionsmaschinen im Verbraucherkreislauf erst mit großer Zeitverzögerung in Betrieb gehen.

Nach einer längeren Aufwärmzeit liefern die Holzkessel H1, H2 Wärme (z. B. nach einer Stunde) und die Anlagenvorlauftemperatur steigt an, da mehr Wärme produziert wird als durch die Verbraucher oder den Pufferspeicher P abgenommen werden kann. Dabei kann die Vorlauftemperatur über den geforderten Sollwert ansteigen. Typischerweise wird das Überschwingen der Vorlauftemperatur über den Sollwert als Kriterium zum Ausschalten des Gaskessels G1 verwendet. Hieraus resultiert eine entsprechend schlechte Regelgüte, wodurch wärmeverbrauchende Produktionsmaschinen im Verbraucherkreislauf eventuell außer Betrieb gehen könnten. Ist die abgenommene Leistung geringer als die Summe der Nennleistung beider Holzkessel H1, H2, werden die Holzkessel H1, H2 in ungünstigen Betriebspunkten (jeweils mit niedriger Leistung) betrieben.

Ist die abgenommene Leistung geringer als die Summe der Grundleistung beider Holzkessel H1, H2, wird der zweite Holzkessel nach kurzer Zeit außer Betrieb genommen. Eine schlechte Energiebilanz und negative Auswirkungen auf Lebensdauer und Wartungsintensität der Holzkessel H1, H2 sind die Folge.

Figur 8 zeigt, wie eine erfindungsgemäße Reihenfolge des Einschaltens und/oder Ausschaltens für die Energieerzeuger der Energieversorgungsanlage des vierten Ausführungsbeispiels bestimmt werden kann. Die Holzkessel H1, H2 sind in einer Gruppe GR1 zusammengefasst, so dass wie oben beschrieben ein Laufzeitausgleich zwischen den beiden gleichartigen Energieerzeugern H1, H2 stattfinden kann.

Würde man den Gaskessel G1 ebenfalls in der ersten Kaskade 1 als letzten Energieerzeuger anordnen, könnte er entsprechend der sequentiellen Reihenfolge in der Kaskade 1 erst dann eingeschaltet werden, wenn die Holzkessel H1, H2 bereits in Betrieb sind und die benötige Energiemenge nicht ausreicht um die Energiebereitstellungsanforderung EA zu erfüllen. Der gut regelbare Gaskessel G1 könnte mithin nicht zum schnellen Erfüllen von Spitzenlasten eingesetzt werden, was die Regelgüte signifikant verschlechtern würde.

Die Holzkessel H1, H2 würden ähnlich wie die BHKWs B1, B2 im dritten Ausführungsbeispiel ein- und ausgeschaltet werden. Der Gaskessel G1 wird hier jedoch in einer separaten Kaskade 2 angeordnet und kann somit in Abhängigkeit einer am Anlagenvorlauf gemessenen Differenz zwischen einer Isttemperatur und einer Solltemperatur betrieben werden. Folglich kann der Gaskessel G1 unabhängig vom Schaltzustand der Holzkessel H1, H2 betrieben werden, so dass eine verbesserte Regelgüte erreicht wird.

Um zu vermeiden, dass die Holzkessel H1, H2 in ungünstigen Arbeitspunkten mit geringer Leistung betrieben werden, obwohl die Leistung nur eines Holzkessels H1, H2 zur Deckung der benötigen Leistung ausreichen würde, kann diese Situation durch die Auswertung der Leistungsbilanz innerhalb der Gruppe Gr1 detektiert werden. Ein entsprechendes Kriterium zum Ausschalten des zweiten Holzkessels H2 kann hierdurch festgelegt werden.

Beim Einschalten beziehungsweise Hochfahren der Energieversorgungsanlage nach einem längeren Stillstand erkennt die Steuereinrichtung S, dass die Energiebereitstellungsanforderung durch nur einen Holzkessel H1 erfüllt werden könnte. Somit wird der zweite Holzkessel H2 erst gar nicht durch die Steuereinrichtung S freigegeben. Da der Holzkessel H1 aber eine lange Zeit benötigt, um aufzuheizen, wird der Gaskessel G1 zum Bereitstellen der geforderten Wärmemenge eingeschaltet. Sobald der Holzkessel H1 ausreicht, um die Forderung zu erfüllen wird der Gaskessel G1 wieder ausgeschaltet.

Sinkt der Wert der geforderten Energiemenge so weit ab, dass die vom Holzkessel H1 bereitgestellte Vorlauftemperatur die geforderte Anlagenvorlauftemperatur überschreitet, kann die Steuereinrichtung die gelieferte Wärme im Pufferspeicher P zwischenspeichern. Ist ausreichend Wärme im Pufferspeicher P vorhanden, so kann dieser wie ein Energieerzeuger zum Bereitstellen von Wärme von der Steuereinrichtung S herangezogen werden, wodurch insbesondere schnell auftretende Leistungsschwankungen ausgeglichen werden können.

### Fünftes Ausführungsbeispiel

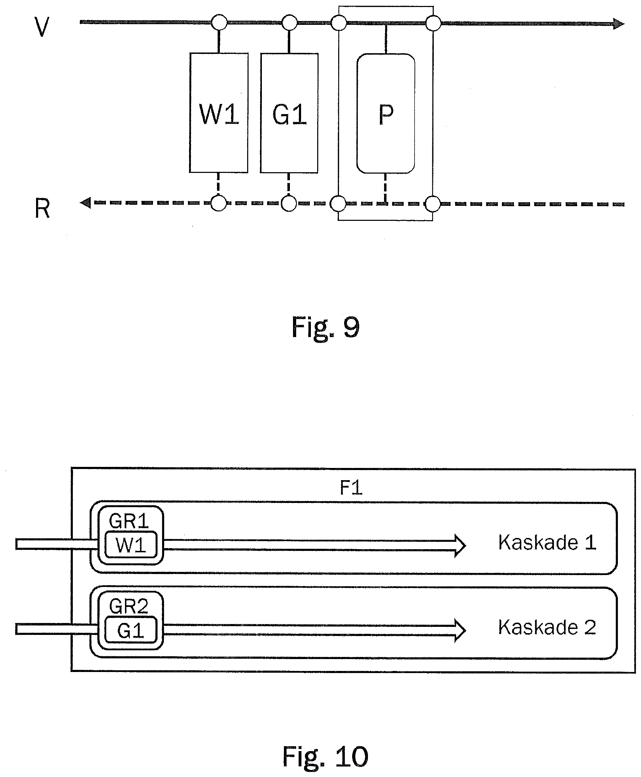

Figur 9 zeigt ein Hydraulikschema einer Energieversorgungsanlage gemäß einem fünften Ausführungsbeispiel. Eine Wärmepumpe W1 und ein Gaskessel G1 sind parallel zu einander und parallel zu einem Pufferspeicher P zwischen Vorlauf V und Rücklauf R angeordnet.

Die Wärmepumpe W1 soll bevorzugt eingesetzt werden und eine Mindestenergieanforderung erfüllen. Der Gaskessel G1 soll als Spitzenlastkessel lediglich die Differenz zur geforderten Wärmemenge decken und somit eine Maximalenergieanforderung erfüllen.

Damit die Wärmepumpe W1 zuerst eingesetzt wird, muss gemäß dem Stand der Technik eine feste (sequenzielle) Ein- und Ausschaltfolge vorgegeben werden. Die Wärmepumpe W1 kann allerdings bei einer zu hohen Rücklauftemperatur nicht in Betrieb gehen. Aufgrund der festen Einschaltreihenfolge kann dann aber auch der Gaskessel G1 nicht in Betrieb genommen werden. Die geforderte Wärmemenge kann dann nicht geliefert werden. Dies ist ein Beispiel dafür, wie ein erzeugerspezifisches Kriterium in Abhängigkeit eines Anlagenparameters (Rücklauftemperatur) ein Anschalten des Energieerzeugers verhindern kann und somit in einer sequenziellen Schaltreihenfolge ein Anschalten weiterer Energieerzeuger blockiert.

Die erfindungsgemäße Lösung dieses Problems wird anhand von Figur 10 beschrieben. Die Wärmepumpe W1 und der Gaskessel G1 sind jeweils in eigene Kaskaden 1 und 2 eingeteilt. Dies ermöglicht, dass die beiden Energieerzeuger W1, G1 parallel und unabhängig voneinander geschaltet werden können. Damit die Wärmepumpe W1 bevorzugt eingesetzt wird, bestimmt die Steuereinrichtung S die Sollwert- und Schaltvorgaben zum Erfüllen einer Energiebereitstellungsanforderung in Abhängigkeit von erzeugerspezifischen Kriterien. In dem vorliegenden Beispiel beziehen sich die erzeugerspezifischen Kriterien auf die Art des Energieerzeugers und seine dynamischen Eigenschaft. So erfasst die Steuereinrichtung S die Restriktionen der Energieerzeuger, die zum Beispiel ein Ausschalten der Wärmepumpe W1 bei zu hoher Rücklauftemperatur erzwingen und eine bestimmte Wartezeit zwischen Schaltvorgängen vorgeben.

Anders als in Figur 10 gezeigt könnten die Wärmepumpe W1 und der Gaskessel G1 auch zusammen in einer ersten Kaskade 1 platziert werden. Würde nun W1 bei Überschreiten eines festgelegten Temperatur-Schwellenwerts ausgeschaltet, so würde die Steuereinrichtung S eine Restriktion von W1 bekommen, dass W1 für eine bestimmte Zeit nicht mehr einschaltbar ist. Dies würde dazu führen, dass W1 in der Einschalt-Reihenfolge übersprungen würde und der nächste Energieerzeuger, hier der Gaskessel G1, bei Bedarf eingeschaltet werden könnte.

### Sechstes Ausführungsbeispiel

In einem sechsten Ausführungsbeispiel umfasst die Energieversorgungsanlage zwei Gaskessel G1, G2 und zwei Ölkessel O1, O2, die alle parallel zueinander zwischen Vorlauf V und Rücklauf R angeordnet sind. Für die Übergabe der Wärme in einen Verbraucherkreislauf ist eine Wärmeübergabe vorgesehen. Ein Hydraulikschema der Energieversorgungsanlage gemäß dem vierten Ausführungsbeispiel ist in Figur 11 dargestellt.

Bei der Steuerung der Energieversorgungsanlage sollen die aktuellen Energiekosten und/oder die Verfügbarkeit von Erdgas und Heizöl berücksichtigt werden. Der Energieträger mit den geringeren Energiekosten soll bevorzugt eingesetzt werden. Außerdem soll zwischen den Kesseln gleicher Brennstoffart ein Laufzeitausgleich stattfinden.

Alle Kessel können in nur einer Kaskade betrieben werden. Um die oben formulierte Aufgabe zu erfüllen werden die Gaskessel G1, G2 und die Ölkessel O1, O2 wie in Figur 12 dargestellt jeweils einer eigenen Gruppe zugeordnet. Innerhalb der Gruppen findet jeweils ein Laufzeitausgleich statt. In Abhängigkeit der Energiepreise wird die Reihenfolge der Gruppen gewählt, so dass die Gruppe mit den geringeren Wärmegestehungskosten zuerst eingeschaltet wird.

### Siebtes Ausführungsbeispiel

Die Steuerung einer multivalenten Energieversorgungsanlage durch Einteilen der Energieerzeuger in Gruppen und Kaskaden wird im Folgenden nochmals anhand eines siebten Ausführungsbeispiels erläutert.

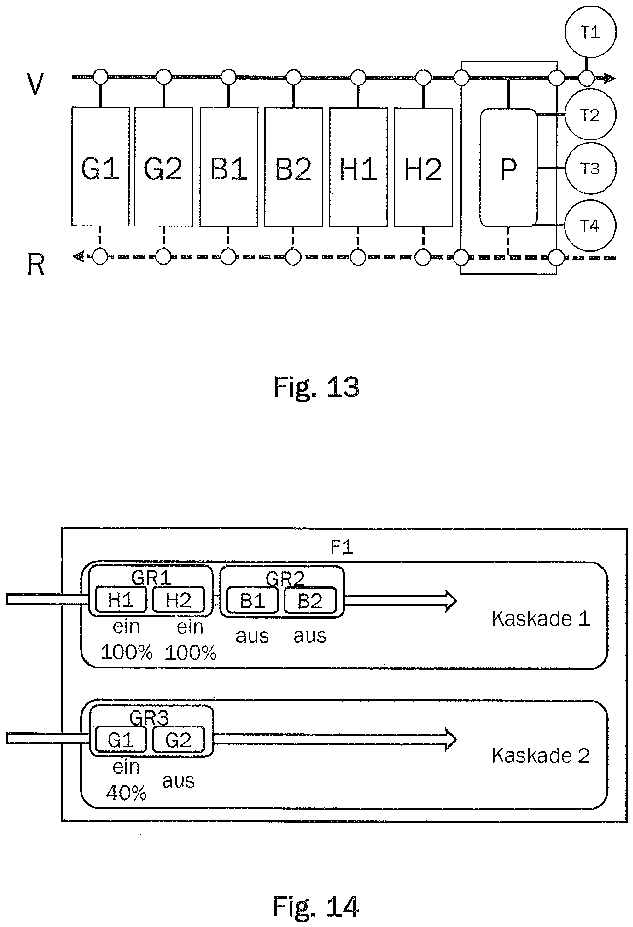

Figur 13 zeigt ein Hydraulikschema der multivalenten Energieversorgungsanlage gemäß dem siebten Ausführungsbeispiel. Die multivalente Energieversorgungsanlage umfasst je zwei Gaskessel G1, G2, die Energie in Form von Wärme bereitstellen, zwei BKHWs B1, B2, die Energie in Form von Wärme und elektrischen Strom bereitstellen, zwei Holzkessel H1, H2, die Energie in Form von Wärme bereitstellen, und einen Pufferspeicher P. Außerdem ist im Vorlauf V ein Temperatursensor T1 angeordnet, der die Anlagenvorlauftemperatur misst. Im Pufferspeicher P sind drei Temperatursensoren T2, T3, T4 angeordnet, die jeweils die Temperatur im Pufferspeicher P messen, respektive in einem oberen Bereich, in einem mittleren Bereich und in einem unteren Bereich des Pufferspeichers. Die Gaskessel G1, G2 nutzen Erdgas aus einer Gaszuleitung als Energieträger, die BHKWs B1, B2 nutzen Diesel aus einem Brennstofftank und die Holzkessel H1, H2 nutzen Holzpellets aus einem Holzpelletspeicher, der die Holzkessel H1, H2 über eine Fördereinrichtung mit Brennstoff beschickt.

Jeder der Energieerzeuger G1, G2, B1, B2, H1, H2 weist jeweils eine Regeleinrichtung zum Regeln von Regelgrößen des jeweiligen Energieerzeugers G1, G2, B1, B2, H1, H2 auf. Diese Regelgrößen umfassen unter anderem eine abgegebene Wärmeleistung und einen Volumenstrom eines fluiden Trägermediums durch die Energieerzeuger G1, G2, B1, B2, H1, H2, an das die Wärme abgegeben wird. Zum Steuern des Volumenstroms sind in den Energieerzeugern G1, G2, B1, B2, H1, H2 selbst oder in den mit den Energieerzeugern G1, G2, B1, B2, H1, H2 verbundenen Leitungen (Vorlauf V und/oder Rücklauf R) jeweils Ventile und/oder Drosselklappen und/oder Umwälzpumpen angeordnet. Bei den BHKWs B1, B2 gehört zu den Regelgrößen auch ein abgegebener elektrische Strom beziehungsweise eine elektrische Spannung.

Die Steuerung der Energieversorgungsanlage durch eine Steuereinrichtung S zum Erfüllen einer erfassten Energiebereitstellungsanforderung EA, die zum Beispiel eine geforderte Anlagenvorlauftemperatur am Messpunkt T1 oder eine Pufferspeichertemperatur an einem der drei Messpunkte T2, T3, T4 des Pufferspeichers Pfestlegt, erfolgt in Abhängigkeit der jeweils durch die Energieerzeuger G1, G2, B1, B2, H1, H2 genutzten Energieträger Gas, Diesel und Holz. Holz soll hierbei als bevorzugter Energieträger verwendet werden. Ferner sollen die BHKWs B1, B2 möglichst im Dauerbetrieb laufen. Um die Energiebereitstellungsanforderung EA zu erfüllen, bestimmt die Steuereinrichtung S Sollwerte SW für jeden der Energieerzeuger G1, G2, B1, B2, H1, H2 und gibt diese an die Regeleinrichtungen der Energieerzeuger G1, G2, B1, B2, H1, H2 aus. Die Sollwerte SW können Vorgaben für Regelgrößen der Energieerzeuger G1, G2, B1, B2, H1, H2 sowie Anweisungen zum Einschalten und/oder Ausschalten der Energieerzeuger G1, G2, B1, B2, H1, H2 umfassen.

Die Steuereinrichtung S erfasst eine Reihenfolge des Einschaltens und/oder Ausschaltens der Energieerzeuger G1, G2, B1, B2, H1, H2. Die Reihenfolge wird anhand der in Figur 12 dargestellten Einteilung der Energieerzeuger G1, G2, B1, B2, H1, H2 in Gruppen und Kaskaden festgelegt. Die beiden gleichartigen Holzkessel H1, H2 werden einer gemeinsamen Gruppe GR1 zugeordnet. Wie schon zuvor beschrieben kann in einer Gruppe ein Laufzeitausgleich zwischen den Holzkesseln H1, H2 stattfinden. In entsprechender Weise werden die beiden BHKWs B1, B2 der Gruppe GR2 zugeordnet und ebenfalls mit Laufzeitausgleich betrieben. Die beiden Gaskessel G1 und G2 werden einer Gruppe GR3 zugeordnet. Auch zwischen den Gaskessel G1, G2 kann ein Laufzeitausgleich stattfinden.

Die Holzkessel H1, H2 und die BHKWs B1, B2 werden als bevorzugte Energieerzeuger eingestuft, da ihr Betrieb im Vergleich zu den Gaskesseln G1, G2 in Hinblick auf die Verfügbarkeit der genutzten Energieträger Vorteile aufweist. Zudem soll in einer ersten Betriebsart der multivalenten Energieversorgungsanlage möglichst ununterbrochen elektrische Energie bereitgestellt werden. Die Gruppen GR1 und GR2 werden dazu wie in Figur 14 dargestellt einer ersten Kaskade 1 zugeordnet. Die Reihenfolge der Gruppen GR1 und GR2 innerhalb der Gruppe kann anhand von gruppenspezifischen Kriterien erfolgen. So kann die Reihenfolge zum Beispiel je nach aktuellen Brennstoffkosten festgelegt werden, in Abhängigkeit von geplanten Wartungsmaßnahmen erfolgen oder von einer Energiebereitstellungsanforderung für elektrische Energie abhängig gemacht werden. Außerdem können auch andere spezifische Eigenschaften der Energieerzeuger die Reihenfolge der Gruppen GR1, GR2 in der Kaskade 1 beeinflussen.

Die Leistungsabgabe von Holzkesseln kann nur schlecht moduliert werden. Die beiden Holzkessel H1, H2 des Ausführungsbeispiels können entweder bei maximaler Leistung betrieben werden oder ausgeschaltet sein. Wie zuvor beschrieben sind die Vorgänge des Ein- beziehungsweise Ausschaltens vom Zuführen beziehungsweise Aufbrauchens des Brennstoffs Holz in der Brennkammer abhängig und somit relativ zeitintensive Prozesse. Die Holzkessel H1, H2 reagieren somit nur sehr träge auf eine Regelgrößenänderung und können entweder keine Leistung (Minimalwert) oder maximale Leistung (Maximalwert) abgeben. Aufgrund dieser spezifischen Eigenschaften werden die Holzkessel in die gemeinsame Gruppe GR1 eingeteilt.

Ist mindestens einer der Holzkessel H1, H2 in Betrieb, so kann er bis zum vollständigen Verbrennen des geladenen Brennstoffs erst einmal nicht mehr ausgeschaltet werden. Die Regeleinrichtung des Holzkessels teilt dann der Steuereinrichtung S mit, dass eine Restriktion für den Holzkessel H1 oder H2 vorliegt, die besagt, dass der Holzkessel eingeschaltet sein muss.

Hat beispielsweise einer der Holzkessel H1, H2 eine Maximalbetriebszeit erreicht, und muss er gewartet werden, so kann die Steuereinrichtung S die entsprechende Restriktion erfassen, dass der Holzkessel H1 oder H2 ausgeschaltet sein muss.

Da die Holzkessel H1, H2 aufgrund ihrer Trägheit möglichst dauerhaft betrieben werden, eignet sich die Gruppe GR1 mit den Holzkesseln H1, H2 besonders gut zum Bereitstellen einer Mindestenergieanforderung der Energieversorgungsanlage in Form von Wärme. Alternativ kann auch die Gruppe GR2 mit den BHKWs B1, B2 zum Bereitstellen einer Mindestenergieanforderung der Energieversorgungsanlage in Form von Wärme verwendet werden. Dabei kann die Gruppe GR2 auch gleichzeitig eine Mindestenergieanforderung der Energieversorgungsanlage in Form von elektrischer Energie bereitstellen. Die Steuereinrichtung S kann eine der beiden Gruppen GR1 und GR2 zum Bereitstellen der Mindestenergieanforderung in Abhängigkeit der gewählten Betriebsart auswählen.

Die in ihrer Leistungsabgabe gut regelbaren und schnell auf Regelgrößenänderung reagierenden Gaskessel G1, G2 eignen sich aufgrund dieser spezifischen Eigenschaften besonders gut zum Bereitstellen einer Maximalenergieanforderung. Insbesondere wenn die von den Holzkesseln H1, H2 bereitgestellte Wärmemenge nicht ausreicht um eine maximale Wärmeanforderung zu erfüllen, werden die Gaskessel G1, G2 eingeschaltet, um die Anforderung zu erfüllen.

Die Steuereinrichtung S der Energieversorgungsanlage des siebten Ausführungsbeispiels kann ferner eine Energieerzeugererfassungseinrichtung 14 aufweisen. Diese erfasst, welche Energieformen die Energieerzeuger G1, G2, B1, B2, H1, H2 jeweils bereitstellen können. Liegt eine durch eine Anforderungserfassungseinrichtung 10 erfasste Energiebereitstellungsanforderung EA zum gleichzeitigen Bereitstellen von Wärme und elektrischer Energie vor, so ermittelt die Energieerzeugererfassungseinrichtung 14, dass die BHKWs B1, B2 Wärme und elektrische Energie bereitstellen können und gibt diese Information an eine Sollwertbestimmungseinrichtung 11 der Steuereinrichtung S weiter. Die Sollwertbestimmungseinrichtung 11 ermittelt dann Sollwerte SW für die BHKWs B1, B2 zum Bereitstellen von Wärme und elektrischer Energie in Abhängigkeit der Energiebereitstellungsanforderung EA. Eine Sollwertausgabeeinrichtung 12 gibt die Sollwerte SW an die Regeleinrichtungen der BHKWs B1, B2 über eine geeignete Kommunikationsschnittstelle aus.

Figur 14 illustriert die Einteilung der Energieerzeuger des siebten Ausführungsbeispiels in Gruppen und Kaskaden. Außerdem wird ein beispielhafter Anlagenzustand angezeigt, bei dem die beiden Holzkessel H1, H2 der ersten Gruppe GR1 beide eingeschaltet sind und unter Volllast laufen. Die beiden BHKWs B1, B2 der zweiten Gruppe GR2 sind ausgeschaltet. Der erste Gaskessel G1 ist eingeschaltet und wird modulierend betrieben bei einer Last von 40% der Maximalleistung.

Die in der vorstehenden Beschreibung, den Ansprüchen und den Zeichnungen offenbarten Merkmale können sowohl einzeln als auch In beliebiger Kombination für die Verwirklichung der Erfindung in ihren verschiedenen Ausgestaltungen von Bedeutung sein.

### Bezugszeichenliste

- V: Vorlauf
- R: Rücklauf
- S: Steuereinrichtung
- P: Pufferspeicher
- R1: erste Regelungseinrichtung
- R2: zweite Regelungseinrichtung
- R3: dritte Regelungseinrichtung
- E1: erster Energieerzeuger
- E2: zweiter Energieerzeuger
- E3: dritter Energieerzeuger
- E4: vierter Energieerzeuger
- E5: fünfter Energieerzeuger
- E6: sechster Energieerzeuger
- E7: siebter Energieerzeuger
- E8: achter Energieerzeuger
- G1: erster Gaskessel
- G2: zweiter Gaskessel
- O1: erster Ölkessel
- O2: zweiter Ölkessel
- B1: erstes BHKW
- B2: zweites BHKW
- H1: erster Holzkessel
- H2: zweiter Holzkessel
- GR1: erste Gruppe
- GR2: zweite Gruppe
- GR3: dritte Gruppe
- GR4: vierte Gruppe
- GR5: fünfte Gruppe
- F1: erste Energieform (Wärme)
- F2: zweite Energieform (elektrische Energie)
- F3: dritte Energieform (Kälte)

## Patentansprüche

1. Verfahren zum Steuern einer multivalenten Energieversorgungsanlage, wobei die multivalente Energieversorgungsanlage mindestens umfasst:
- mindestens zwei Energieerzeuger (E1-E8, B1, B2, G1, G2, H1, H2, O1, O2, W1), die mindestens zwei verschiedene Energieträger nutzen, um Energie in Form von Wärme (F1) und/oder Kälte (F3) und/oder elektrischer Energie (F2) bereitzustellen;
- je Energieerzeuger eine Regeleinrichtung (R1-R3) zum Regeln von Regelgrößen des Energieerzeugers (E1-E8, B1, B2, G1, G2, H1, H2, O1, O2, W1); und
- eine Steuereinrichtung (S) zum koordinierten Steuern der Regeleinrichtungen (R1-R3),
wobei die Steuereinrichtung (S) die folgenden Verfahrensschritte ausführt:
- Erfassen mindestens einer Energiebereitstellungsanforderung (EA) für jeweils mindestens eine Energieform Wärme (F1) und/oder Kälte (F3) und/oder elektrische Energie (F2);
**gekennzeichnet durch**
- Festlegen einer Einteilung der Energieerzeuger (E1-E8, B1, B2, G1, G2, H1, H2, O1, O2, W1) in Gruppen (GR1-GR5) gemäß einer spezifischen Eigenschaft der Energieerzeuger (E1-E8, B1, B2, G1, G2, H1, H2, O1, O2, W1), wobei jeder Energieerzeuger (E1-E8, B1, B2, G1, G2, H1, H2, O1, O2, W1) für jede Energieform (F1-F3), die er bereitstellt, genau einer Gruppe (GR1-GR5) zugeordnet wird;
- für jeden Energieerzeuger (E1-E8, B1, B2, G1, G2, H1, H2, O1, O2, W1), Bestimmen von Sollwerten (SW) zum Erfüllen der mindestens einen Energiebereitstellungsanforderung in Abhängigkeit der Einteilung der Energieerzeuger (E1-E8, B1, B2, G1, G2, H1, H2, O1, O2, W1) in Gruppen (GR1-GR5); und
- Ausgeben der Sollwerte (SW) an die Regeleinrichtungen (R1-R3).

2. Verfahren nach Anspruch 1, wobei die Steuereinrichtung (S) ferner die folgenden Schritte ausführt:
- falls eine Gruppe (GR1-GR5) mehr als einen Energieerzeuger (E1-E8, B1, B2, G1, G2, H1, H2, O1, O2, W1) aufweist, Erfassen von aktuellen und/oder historischen Regelgrößen der Energieerzeuger (E1-E8, B1, B2, G1, G2, H1, H2, O1, O2, W1) der Gruppe (GR1-GR5), die einen aktuellen Betriebszustand und/oder einen historischen Verlauf von Betriebszuständen beschreiben;
- Festlegen einer Reihenfolge der Energieerzeuger (E1-E8, B1, B2, G1, G2, H1, H2, O1, O2, W1) innerhalb der Gruppe (GR1-GR5) gemäß der erfassten Regelgrößen und/oder einem Verhältnis der Regelgrößen; und
- für jeden Energieerzeuger (E1-E8, B1, B2, G1, G2, H1, H2, O1, O2, W1), Bestimmen von Sollwerten (SW) zum Erfüllen der mindestens einen Energiebereitstellungsanforderung in Abhängigkeit der festgelegten Reihenfolge der Energieerzeuger (E1-E8, B1, B2, G1, G2, H1, H2, O1, O2, W1) innerhalb der Gruppe (GR1-GR5).

3. Verfahren nach Anspruch 1 oder 2, wobei die Steuereinrichtung (S) für jede Energieform (F1-F3) ferner die folgenden Schritte ausführt:
- Einteilen der Gruppen (GR1-GR5) von Energieerzeugern (E1-E8, B1, B2, G1, G2, H1, H2, O1, O2, W1) in Kaskaden in Abhängigkeit mindestens einer für die Energieerzeuger (E1-E8, B1, B2, G1, G2, H1, H2, O1, O2, W1) der Gruppe spezifischen Eigenschaft, wobei jede Gruppe (GR1-GR5) genau einer Kaskade zugeordnet wird;
- falls eine Kaskade mehr als eine Gruppe (GR1-GR5) umfasst, Festlegen einer sequenziellen Reihenfolge der Gruppen (GR1-GR5) in der Kaskade; und
- für jeden Energieerzeuger (E1-E8, B1, B2, G1, G2, H1, H2, O1, O2, W1), Bestimmen von Sollwerten (SW) zum Erfüllen der mindestens einen Energiebereitstellungsanforderung in Abhängigkeit der festgelegten Einteilung der Gruppen (GR1-GR5) in Kaskaden, wobei Kaskaden unabhängig voneinander steuerbar sind.

4. Verfahren nach Anspruch 3, wobei die Steuereinrichtung (S) ferner die folgenden Schritte ausführt:
- Innerhalb jeder Kaskade, Festlegen der Reihenfolge der Gruppen (GR1-GR5) von Energieerzeugern (E1-E8, B1, B2, G1, G2, H1, H2, O1, O2, W1) in Abhängigkeit mindestens einer der folgenden Eigenschaften der Energieerzeuger (E1-E8, B1, B2, G1, G2, H1, H2, O1, O2, W1): spezifischer Energiegehalt des jeweils verwendeten Energieträgers, Preis des jeweils verwendeten Energieträgers, Verfügbarkeit des jeweils verwendeten Energieträgers, Dauer bis Erreichen eines Wartungsintervalls des Energieerzeugers (E1-E8, B1, B2, G1, G2, H1, H2, O1, O2, W1), physische Anordnung der jeweiligen Energieerzeuger (E1-E8, B1, B2, G1, G2, H1, H2, O1, O2, W1) in der multivalenten Energieversorgungsanlage oder Festlegen der Reihenfolge der Gruppen durch einen Benutzer; und
- für jeden Energieerzeuger (E1-E8, B1, B2, G1, G2, H1, H2, O1, O2, W1), Bestimmen von Sollwerten (SW) zum Erfüllen der mindestens einen Energiebereitstellungsanforderung in Abhängigkeit der festgelegten Reihenfolge der Gruppen (GR1-GR5).

5. Verfahren nach mindestens einem der vorhergehenden Ansprüche, wobei die spezifische Eigenschaft des Energieerzeugers (E1-E8, B1, B2, G1, G2, H1, H2, O1, O2, W1) von der Art des von dem Energieerzeuger (E1-E8, B1, B2, G1, G2, H1, H2, O1, O2, W1) verwendeten Energieträgers und/oder von der physischen Anordnung des Energieerzeugers (E1-E8, B1, B2, G1, G2, H1, H2, O1, O2, W1) in der multivalenten Energieversorgungsanlage abhängt.

6. Verfahren nach mindestens einem der vorhergehenden Ansprüche, wobei mindestens ein Energieerzeuger (E1-E8, B1, B2, G1, G2, H1, H2, O1, O2, W1) zum Erfüllen einer Mindestenergieanforderung verwendet wird.

7. Verfahren nach mindestens einem der vorhergehenden Ansprüche, wobei mindestens ein Energieerzeuger (E1-E8, B1, B2, G1, G2, H1, H2, O1, O2, W1) zum Erfüllen einer Maximalenergieanforderung verwendet wird.

8. Verfahren nach mindestens einem der vorhergehenden Ansprüche, wobei die Steuereinrichtung (S) ferner die folgenden Schritte ausführt:
- Erfassen, ob eine Energiebereitstellungsanforderung (EA) zum Bereitstellen von Wärme (F1) und elektrischer Energie (F2) vorliegt;
- Ermitteln, ob einer der Energieerzeuger (E1-E8, B1, B2, G1, G2, H1, H2, O1, O2, W1) Wärme (F1) und elektrischer Energie (F2) bereitstellen kann;
- Bestimmen von Sollwerten (SW) für den Energieerzeuger (E1-E8, B1, B2, G1, G2, H1, H2, O1, O2, W1) zum Bereitstellen von Wärme (F1) und elektrischer Energie (F2) in Abhängigkeit der Energiebereitstellungsanforderung (EA).

9. Steuereinrichtung (S) zum Steuern einer multivalenten Energieversorgungsanlage, wobei die multivalente Energieversorgungsanlage mindestens umfasst:
- mindestens zwei Energieerzeuger (E1-E8, B1, B2, G1, G2, H1, H2, O1, O2, W1), die mindestens zwei verschiedene Energieträger nutzen, um Energie in Form von Wärme (F1) und/oder Kälte (F3) und/oder elektrischer Energie (F2) bereitzustellen;
- je Energieerzeuger eine Regeleinrichtung (R1-R3) zum Regeln von Regelgrößen des Energieerzeugers (E1-E8, B1, B2, G1, G2, H1, H2, O1, O2, W1); und
- eine Steuereinrichtung (S) zum koordinierten Steuern der Regeleinrichtungen (R1-R3),
wobei die Steuereinrichtung (S) dafür ausgelegt ist
- mindestens eine Energiebereitstellungsanforderung (EA) für jeweils mindestens eine Energieform Wärme (F1) und/oder Kälte (F3) und/oder elektrische Energie (F3) zu erfassen;
**gekennzeichnet durch**
- eine Einteilung der Energieerzeuger (E1-E8, B1, B2, G1, G2, H1, H2, O1, O2, W1) in Gruppen (GR1-GR5) gemäß einer spezifischen Eigenschaft der Energieerzeuger (E1-E8, B1, B2, G1, G2, H1, H2, O1, O2, W1) festzulegen, wobei jeder Energieerzeuger (E1-E8, B1, B2, G1, G2, H1, H2, O1, O2, W1) genau einer Gruppe (GR1-GR5) zugeordnet wird;
- für jeden Energieerzeuger (E1-E8, B1, B2, G1, G2, H1, H2, O1, O2, W1) Sollwerte (SW) zum Erfüllen der mindestens einen Energiebereitstellungsanforderung in Abhängigkeit der Einteilung der Energieerzeuger (E1-E8, B1, B2, G1, G2, H1, H2, O1, O2, W1) in Gruppen (GR1-GR5) zu bestimmen; und
- Die Sollwerte (SW) an die Regeleinrichtungen (R1-R3) auszugeben.

10. Steuereinrichtung (S) nach Anspruch 9, wobei die Steuereinrichtung ferner dafür ausgelegt ist:
- die Gruppen (GR1-GR5) von Energieerzeugern (E1-E8, B1, B2, G1, G2, H1, H2, O1, O2, W1) in Kaskaden einzuteilen, in Abhängigkeit mindestens einer für die Gruppe von Energieerzeugern (E1-E8, B1, B2, G1, G2, H1, H2, O1, O2, W1) spezifischen Eigenschaft, wobei jede Gruppe (GR1-GR5) genau einer Kaskade zugeordnet wird;
- falls eine Kaskade mehr als eine Gruppe (GR1-GR5) umfasst, eine sequenzielle Reihenfolge der Gruppen (GR1-GR5) in der Kaskade festzulegen; und
- für jeden Energieerzeuger (E1-E8, B1, B2, G1, G2, H1, H2, O1, O2, W1) Sollwerte (SW) zum Erfüllen der mindestens einen Energiebereitstellungsanforderung zu bestimmen, in Abhängigkeit der festgelegten Einteilung der Gruppen (GR1-GR5) in Kaskaden, wobei Kaskaden unabhängig voneinander steuerbar sind.

## Claims

1. A method for controlling a multivalent energy supply system, wherein the multivalent energy supply system comprises at least:
- at least two energy generators (E1-E8, B1, B2, G1, G2, H1, H2, O1, O2, W1) which use at least two different energy carriers in order to provide energy in the form of heat (F1) and/or cold (F3) and/or electrical energy (F2);
- for each energy generator a closed-loop controller (R1-R3) for controlling control variables of the energy generator (E1-E8, B1, B2, G1, G2, H1, H2, O1, O2, W1); and
- a control device (S) for the coordinated control of the closed-loop controllers (R1-R3),
wherein the control device (S) performs the following method steps:
- detecting at least one energy supply request (EA) respectively for at least one energy form of heat (F1) and/or cold (F3) and/or electrical energy (F2);
**characterized by**
- establishing a classification of the energy generators (E1-E8, B1, B2, G1, G2, H1, H2, O1, O2, W1) into groups (GR1-GR5) according to a specific property of the energy generators (E1-E8, B1, B2, G1, G2, H1, H2, O1, O2, W1), wherein each energy generator (E1-E8, B1, B2, G1, G2, H1, H2, O1, O2, W1) is assigned exactly one group (GR1-GR5) for each energy form (F1-F3) which it provides;
- for each energy generator (E1-E8, B1, B2, G1, G2, H1, H2, O1, O2, W1) determining target values (SW) for fulfilling the at least one energy supply request as a function of the classification of the energy generators (E1-E8, B1, B2, G1, G2, H1, H2, O1, O2, W1) into groups (GR1-GR5); and
- outputting the target values (SW) to the closed-loop controllers (R1-R3).

2. The method according to Claim 1, wherein the control device (S) also performs the following steps:
- if a group (GR1-GR5) has more than one energy generator (E1-E8, B1, B2, G1, G2, H1, H2, O1, O2, W1), detecting current and/or historical control variables of the energy generators (E1-E8, B1, B2, G1, G2, H1, H2, O1, O2, W1) of the group (GR1-GR5) which describe a current operating state and/or a historical development of operating states;
- establishing an order of the energy generators (E1-E8, B1, B2, G1, G2, H1, H2, O1, O2, W1) within the group (GR1-GR5) according to the detected control variables and/or a ratio of the control variables; and
- for each energy generator (E1-E8, B1, B2, G1, G2, H1, H2, O1, O2, W1) determining target values (SW) for fulfilling the at least one energy supply request as a function of the established order of the energy generators (E1-E8, B1, B2, G1, G2, H1, H2, O1, O2, W1) within the group (GR1-GR5).

3. The method according to Claim 1 or 2, wherein the control device (S) for each energy form (F1-F3) also performs the following steps:
- classifying the groups (GR1-GR5) of energy generators (E1-E8, B1, B2, G1, G2, H1, H2, O1, O2, W1) into cascades as a function of at least one property which is specific to the energy generators (E1-E8, B1, B2, G1, G2, H1, H2, O1, O2, W1) of the group, wherein each group (GR1-GR5) is assigned to exactly one cascade;
- if a cascade comprises more than one group (GR1-GR5), establishing a sequential order of the groups (GR1-GR5) in the cascade; and
- for each energy generator (E1-E8, B1, B2, G1, G2, H1, H2, O1, O2, W1) determining target values (SW) for fulfilling the at least one energy supply request as a function of the established classification of the groups (GR1-GR5) into cascades, wherein cascades are controllable independently of one another.

4. The method according to Claim 3, wherein the control device (S) also performs the following steps:
- within each cascade establishing the order of the groups (GR1-GR5) of energy generators (E1-E8, B1, B2, G1, G2, H1, H2, O1, O2, W1) as a function of at least one of the following properties of the energy generators (E1-E8, B1, B2, G1, G2, H1, H2, O1, O2, W1): specific energy content of the respectively used energy carrier, price of the respectively used energy carrier; availability of the respectively used energy carrier, time duration until a maintenance interval of the energy generator (E1-E8, B1, B2, G1, G2, H1, H2, O1, O2, W1) is reached, physical arrangement of the respective energy generators (E1-E8, B1, B2, G1, G2, H1, H2, O1, O2, W1) in the multivalent energy supply system or establishing the order of the groups by a user; and
- for each energy generator (E1-E8, B1, B2, G1, G2, H1, H2, O1, O2, W1) determining target values (SW) for fulfilling the at least one energy supply request as a function of the established order of the groups (GR1-GR5).

5. The method according to at least one of the preceding claims, wherein the specific property of the energy generator (E1-E8, B1, B2, G1, G2, H1, H2, O1, O2, W1) depends on the type of energy carrier used by the energy generator (E1-E8, B1, B2, G1, G2, H1, H2, O1, O2, W1) and/or on the physical arrangement of the energy generator (E1-E8, B1, B2, G1, G2, H1, H2, O1, O2, W1) in the multivalent energy supply system.

6. The method according to at least one of the preceding claims, wherein at least one energy generator (E1-E8, B1, B2, G1, G2, H1, H2, O1, O2, W1) is used for fulfilling a minimum energy request.

7. The method according to at least one of the preceding claims, wherein at least one energy generator (E1-E8, B1, B2, G1, G2, H1, H2, O1, O2, W1) is used for fulfilling a maximum energy request.

8. The method according to at least one of the preceding claims, wherein the control device (S) also performs the following steps:
- detecting whether an energy supply request (EA) for providing heat (F1) and electrical energy (F2) is present;
- determining whether one of the energy generators (E1-E8, B1, B2, G1, G2, H1, H2, O1, O2, W1) is able to provide heat (F1) and electrical energy (F2) ;
- determining target values (SW) for the energy generator (E1-E8, B1, B2, G1, G2, H1, H2, O1, O2, W1) for providing heat (F1) and electrical energy (F2) as a function of the energy supply request (EA).

9. A control device (S) for controlling a multivalent energy supply system, wherein the multivalent energy supply system comprises at least:
- at least two energy generators (E1-E8, B1, B2, G1, G2, H1, H2, O1, O2, W1) which use at least two different energy carriers, in order to provide energy in the form of heat (F1) and/or cold (F3) and/or electrical energy (F2);
- for each energy generator a closed-loop controller (R1-R3) for controlling control variables of the energy generator (E1-E8, B1, B2, G1, G2, H1, H2, O1, O2, W1); and
- a control device (S) for the coordinated control of the closed-loop controllers (R1-R3),
wherein a control device (S) is designed
- to detect at least one energy supply request (EA) respectively for at least one energy form of heat (F1) and/or cold (F3) and/or electrical energy (F3) ;
**characterized by**
- establishing a classification of the energy generators (E1-E8, B1, B2, G1, G2, H1, H2, O1, O2, W1) into groups (GR1-GR5) according to a specific property of the energy generators (E1-E8, B1, B2, G1, G2, H1, H2, O1, O2, W1), wherein exactly one group (GR1-GR5) is assigned to each energy generator (E1-E8, B1, B2, G1, G2, H1, H2, O1, O2, W1);
- for each energy generator (E1-E8, B1, B2, G1, G2, H1, H2, O1, O2, W1) determining target values (SW) for fulfilling the at least one energy supply request as a function of the classification of the energy generators (E1-E8, B1, B2, G1, G2, H1, H2, O1, O2, W1) into groups (GR1-GR5); and
- outputting the target values (SW) to the closed-loop controllers (R1-R3).

10. The control device (S) according to Claim 9, wherein the control device is also designed:
- to classify the groups (GR1-GR5) of energy generators (E1-E8, B1, B2, G1, G2, H1, H2, O1, O2, W1) into cascades, as a function of at least one property which is specific to the group of energy generators (E1-E8, B1, B2, G1, G2, H1, H2, O1, O2, W1), wherein each group (GR1-GR5) is assigned to exactly one cascade;
- if a cascade comprises more than one group (GR1-GR5), to establish a sequential order of groups (GR1-GR5) in the cascade; and
- for each energy generator (E1-E8, B1, B2, G1, G2, H1, H2, O1, O2, W1) to determine target values (SW) for fulfilling the at least one energy supply request as a function of the established classification of the groups (GR1-GR5) into cascades, wherein cascades are controllable independently of one another.

## Revendications

1. Procédé pour commander un système d'alimentation en énergie polyvalent, dans lequel le système d'alimentation en énergie polyvalent comprend au moins :
- au moins deux générateurs d'énergie (E1-E8, B1, B2, G1, G2, H1, H2, O1, O2, W1), qui exploitent au moins deux sources d'énergie différentes, afin de fournir de l'énergie sous forme de chaleur (F1) et/ou de froid (F3) et/ou d'énergie électrique (F2) :
- par générateur d'énergie un dispositif de régulation (R1-R3) pour réguler des grandeurs de régulation du générateur d'énergie (E1-E8, B1, B2, G1, G2, H1, H2, O1, O2, W1) ; et
- un dispositif de commande (S) pour commander de manière coordonnée les dispositifs de régulation (R1-R3),
dans lequel le dispositif de commande (S) réalise les étapes de procédé suivantes :
- la détection d'au moins une demande de fourniture d'énergie (EA) pour respectivement au moins une forme d'énergie chaleur (F1) et/ou froid (F3) et/ou énergie électrique (F2) ;
**caractérisé par**
- la fixation d'une répartition des générateurs d'énergie (E1-E8, B1, B2, G1, G2, H1, H2, O1, O2, W1) en groupes (GR1-GR5) selon une propriété spécifique des générateurs d'énergie (E1-E8, B1, B2, G1, G2, H1, H2, O1, O2, W1), dans lequel chaque générateur d'énergie (E1-E8, B1, B2, G1, G2, H1, H2, O1, O2, W1) pour chaque forme d'énergie (F1-F3) qu'il fournit est associé précisément à un groupe (GR1-GR5) ;
- pour chaque générateur d'énergie (E1-E8, B1, B2, G1, G2, H1, H2, O1, O2, W1), la définition de valeurs théoriques (SW) pour satisfaire à l'au moins une demande de fourniture d'énergie en fonction de la répartition des générateurs d'énergie (E1-E8, B1, B2, G1, G2, H1, H2, O1, O2, W1) en groupes (GR1-GR5) ; et
- la distribution des valeurs théoriques (SW) aux dispositifs de régulation (R1-R3).

2. Procédé selon la revendication 1, dans lequel le dispositif de commande (S) réalise en outre les étapes suivantes :
- si un groupe (GR1-GR5) présente plus d'un générateur d'énergie (E1-E8, B1, B2, G1, G2, H1, H2, O1, O2, W1), la détection de grandeurs de régulation actuelles et/ou historiques des générateurs d'énergie (E1-E8, B1, B2, G1, G2, H1, H2, O1, O2, W1) du groupe (GR1-GR5), qui décrivent un état de fonctionnement actuel et/ou une variation historique des états de fonctionnement ;
- la fixation d'un ordre des générateurs d'énergie (E1-E8, B1, B2, G1, G2, H1, H2, O1, O2, W1) à l'intérieur du groupe (GR1-GR5) selon les grandeurs de régulation détectées et/ou un rapport des grandeurs de régulation ; et
- pour chaque générateur d'énergie (E1-E8, B1, B2, G1, G2, H1, H2, O1, O2, W1), la définition de valeurs théoriques (SW) pour satisfaire à l'au moins une demande de fourniture d'énergie en fonction de l'ordre fixé des générateurs d'énergie (E1-E8, B1, B2, G1, G2, H1, H2, O1, O2, W1) à l'intérieur du groupe (GR1-GR5).

3. Procédé selon la revendication 1 ou 2, dans lequel le dispositif de commande (S) réalise en outre pour chaque forme d'énergie (F1-F3) les étapes suivantes :
- la répartition des groupes (GR1-GR5) de générateurs d'énergie (E1-E8, B1, B2, G1, G2, H1, H2, O1, O2, W1) en cascades en fonction d'au moins une propriété spécifique aux générateurs d'énergie (E1-E8, B1, B2, G1, G2, H1, H2, O1, O2, W1) du groupe, dans lequel chaque groupe (GR1-GR5) est associé à précisément une cascade ;
- si une cascade comprend plus d'un groupe (GR1-GR5), la fixation d'un ordre séquentiel des groupes (GR1-GR5) dans la cascade ; et
- pour chaque générateur d'énergie (E1-E8, B1, B2, G1, G2, H1, H2, O1, O2, W1), la définition de valeurs théoriques (SW) pour satisfaire à l'au moins une demande de fourniture d'énergie en fonction de la répartition fixée des groupes (GR1-GR5) en cascades, dans lequel les cascades peuvent être commandées indépendamment les unes des autres.

4. Procédé selon la revendication 3, dans lequel le dispositif de commande (S) réalise en outre les étapes suivantes :
- à l'intérieur de chaque cascade, la fixation de l'ordre des groupes (GR1-GR5) de générateurs d'énergie (E1-E8, B1, B2, G1, G2, H1, H2, O1, O2, W1) en fonction d'au moins une des propriétés suivantes des générateurs d'énergie (E1-E8, B1, B2, G1, G2, H1, H2, O1, O2, W1), la densité énergétique spécifique de la source d'énergie respectivement utilisée, le prix de la source d'énergie respectivement utilisée, la disponibilité de la source d'énergie respectivement utilisée, la durée jusqu'à l'atteinte d'un intervalle d'entretien du générateur d'énergie (E1-E8, B1, B2, G1, G2, H1, H2, O1, O2, W1), la disposition physique des générateurs d'énergie (E1-E8, B1, B2, G1, G2, H1, H2, O1, O2, W1) respectifs dans le système d'alimentation en énergie polyvalent ou la fixation de l'ordre des groupes par un utilisateur ; et
- pour chaque générateur d'énergie (E1-E8, B1, B2, G1, G2, H1, H2, O1, O2, W1), la définition de valeurs théoriques (SW) pour satisfaire à l'au moins une demande de fourniture d'énergie en fonction de l'ordre fixé des groupes (GR1-GR5).

5. Procédé selon au moins l'une des revendications précédentes, dans lequel la propriété spécifique du générateur d'énergie (E1-E8, B1, B2, G1, G2, H1, H2, O1, O2, W1) dépend du type de la source d'énergie utilisée par le générateur d'énergie (E1-E8, B1, B2, G1, G2, H1, H2, O1, O2, W1) et/ou de la disposition physique du générateur d'énergie (E1-E8, B1, B2, G1, G2, H1, H2, O1, O2, W1) dans le système d'alimentation en énergie polyvalent.

6. Procédé selon au moins l'une des revendications précédentes, dans lequel au moins un générateur d'énergie (E1-E8, B1, B2, G1, G2, H1, H2, O1, O2, W1) est utilisé pour satisfaire à une demande énergétique minimale.

7. Procédé selon au moins l'une des revendications précédentes, dans lequel au moins un générateur d'énergie (E1-E8, B1, B2, G1, G2, H1, H2, O1, O2, W1) est utilisé pour satisfaire à une demande d'énergie maximale.

8. Procédé selon au moins l'une des revendications précédentes, dans lequel le dispositif de commande (S) réalise en outre (S) les étapes suivantes :
- le fait de détecter si une demande de fourniture d'énergie (EA) pour fournir de la chaleur (F1) et de l'énergie électrique (F2) est présente ;
- le fait de déterminer si un des générateurs d'énergie (E1-E8, B1, B2, G1, G2, H1, H2, O1, O2, W1) peut fournir de la chaleur (F1) et de l'énergie électrique (F2) ;
- la définition de valeurs théoriques (SW) pour le générateur d'énergie (E1-E8, B1, B2, G1, G2, H1, H2, O1, O2, W1) pour la fourniture de chaleur (F1) et d'énergie électrique (F2) en fonction de la demande de fourniture d'énergie (EA).

9. Dispositif de commande (S) pour commander un système d'alimentation en énergie polyvalent, dans lequel le système d'alimentation en énergie polyvalent comprend :
- au moins deux générateurs d'énergie (E1-E8, B1, B2, G1, G2, H1, H2, O1, O2, W1), qui exploitent au moins deux sources d'énergie différentes, afin de fournir de l'énergie sous forme de chaleur (F1) et/ou de froid (F3) et/ou d'énergie électrique (F2) ;
- un dispositif de régulation (R1-R3) par générateur d'énergie pour réguler des grandeurs de régulation du générateur d'énergie (E1-E8, B1, B2, G1, G2, H1, H2, O1, O2, W1) ; et
- un dispositif de commande (S) pour commander de manière coordonnée les dispositifs de régulation (R1-R3),
dans lequel le dispositif de commande (S) est conçu
- pour détecter au moins une demande de fourniture d'énergie (EA) pour respectivement au moins une forme d'énergie chaleur (F1) et/ou froid (F3) et/ou énergie électrique (F2) ;
**caractérisé par**
- la fixation d'une répartition des générateurs d'énergie (E1-E8, B1, B2, G1, G2, H1, H2, O1, O2, W1) en groupes (GR1-GR5) selon une propriété spécifique des générateurs d'énergie (E1-E8, B1, B2, G1, G2, H1, H2, O1, O2, W1), dans lequel chaque générateur d'énergie (E1-E8, B1, B2, G1, G2, H1, H2, O1, O2, W1) est associé à précisément un groupe (GR1-GR5) ;
- pour chaque générateur d'énergie (E1-E8, B1, B2, G1, G2, H1, H2, O1, O2, W1), la définition des valeurs théoriques (SW) pour satisfaire à l'au moins une demande de fourniture d'énergie en fonction de la répartition des générateurs d'énergie (E1-E8, B1, B2, G1, G2, H1, H2, O1, O2, W1) en groupes (GR1-GR5) ; et
- la distribution les valeurs théoriques (SW) aux dispositifs de régulation (R1-R3).

10. Dispositif de commande (S) selon la revendication 9, dans lequel le dispositif de commande est conçu en outre :
- pour répartir les groupes (GR1-GR5) de générateurs d'énergie (E1-E8, B1, B2, G1, G2, H1, H2, O1, O2, W1) en cascades, en fonction d'au moins une propriété spécifique au groupe de générateurs d'énergie (E1-E8, B1, B2, G1, G2, H1, H2, O1, O2, W1), dans lequel chaque groupe (GR1-GR5) est associé à précisément une cascade ;
- si une cascade comprend plus d'un groupe (GR1-GR5), pour fixer un ordre séquentiel des groupes (GR1-GR5) dans la cascade ; et
- pour chaque générateur d'énergie (E1-E8, B1, B2, G1, G2, H1, H2, O1, O2, W1), pour définir des valeurs théoriques (SW) pour satisfaire à l'au moins une demande de fourniture d'énergie, en fonction de la répartition fixée des groupes (GR1-GR5) en cascades, dans lequel les cascades peuvent être commandées indépendamment les unes des autres.
